(19) Europäisches Patentamt / European Patent Office / Office européen des brevets

(11) **EP 2 244 514 A1**

(12) **EUROPEAN PATENT APPLICATION**

(43) Date of publication:
**27.10.2010 Bulletin 2010/43**

(51) Int Cl.:
**H04W 72/12** (2009.01)

(21) Application number: **09005727.4**

(22) Date of filing: **23.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Panasonic Corporation
Kadoma-shi
Osaka 571-8501 (JP)**

(72) Inventors:
• **Löhr, Joachim**
  **63225 Langen (DE)**
• **Aoyama, Takahisa**
  **Chuo-ku**
  **Osaka 540-6207 (JP)**
• **Feuersänger, Martin**
  **63225 Langen (DE)**

(74) Representative: **Grünecker, Kinkeldey,
Stockmair & Schwanhäusser
Anwaltssozietät
Leopoldstrasse 4
80802 München (DE)**

(54)    **Logical channel prioritization procedure for generating multiple uplink transport blocks**

(57)    The invention relates to methods for scheduling of uplink transmission and generating transport blocks according to multiple received uplink assignments. Furthermore, the invention is also related to the implementation of these methods in hardware and software. To propose strategies for generating plural transport blocks within a given time constraint, the invention introduces prioritization of the uplink assignments, so that multiple uplink assignments can be ranked in the mobile terminal in a priority order. The prioritization of the uplink assignments is used to determine the order in which the individual transport blocks corresponding to the uplink assignments are filled, respectively how the data of different logical channels is multiplexed to the transport blocks for transmission in the uplink. Another aspect of the invention is to suggest joint logical channel procedures that operate on virtual transport blocks accumulated from the received uplink assignments. One or more such joint logical channel procedure can be performed in parallel.

receive n uplink resource assignments
from serving Node B 601

↓

determine priority order of the
n uplink resource assignements 602

↓

accumulate then uplink resource
assignments  to form a virtual TB 603

↓

perform a joint LCP
for the virtual TB 604

↓

divide the virtual TB content to
individual n TBs corresponding to
the n uplink resource assignments
based on priority order 605

**Fig. 6**

**Description**

**FIELD OF THE INVENTION**

The invention relates to methods for scheduling of uplink transmission and generating transport blocks according to multiple received uplink resource assignments. Furthermore, the invention is also related to the implementation/ performance of these methods in/by hardware, i.e. apparatuses, and their implementation in software.

**TECHNICAL BACKGROUND**

**Long Term Evolution (LTE)**

Third-generation mobile systems (3G) based on WCDMA radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio-access technology that is highly competitive.

In order to be prepared for further increasing user demands and to be competitive against new radio access technologies 3GPP introduced a new mobile communication system which is called Long Term Evolution (LTE). LTE is designed to meet the carrier needs for high speed data and media transport as well as high capacity voice support to the next decade. The ability to provide high bit rates is a key measure for LTE.

The work item (WI) specification on Long-Term Evolution (LTE) called Evolved UMTS Terrestrial Radio Access (UTRA) and UMTS Terrestrial Radio Access Network (UTRAN) is to be finalized as Release 8 (LTE Rel. 8). The LTE system represents efficient packet-based radio access and radio access networks that provide full IP-based functionalities with low latency and low cost. The detailed system requirements are given in. In LTE, scalable multiple transmission bandwidths are specified such as 1.4, 3.0, 5.0, 10.0, 15.0, and 20.0 MHz, in order to achieve flexible system deployment using a given spectrum. In the downlink, Orthogonal Frequency Division Multiplexing (OFDM) based radio access was adopted because of its inherent immunity to multipath interference (MPI) due to a low symbol rate, the use of a cyclic prefix (CP), and its affinity to different transmission bandwidth arrangements. Single-carrier frequency division multiple access (SC-FDMA) based radio access was adopted in the uplink, since provisioning of wide area coverage was prioritized over improvement in the peak data rate considering the restricted transmission power of the user equipment (UE). Many key packet radio access techniques are employed including multiple-input multiple-output (MIMO) channel transmission techniques, and a highly efficient control signaling structure is achieved in LTE Rel. 8.

**LTE architecture**

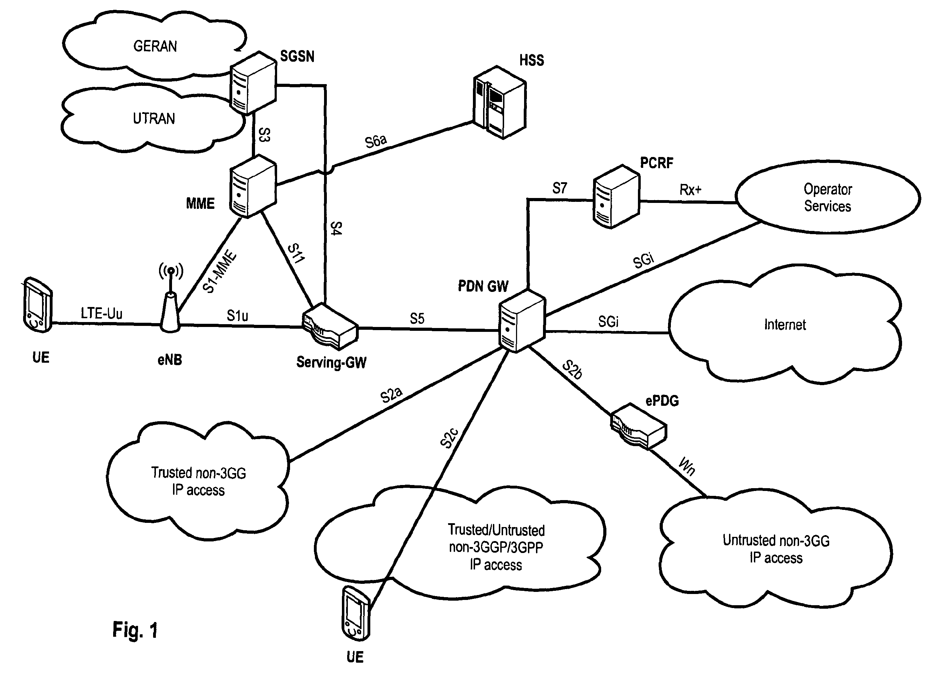

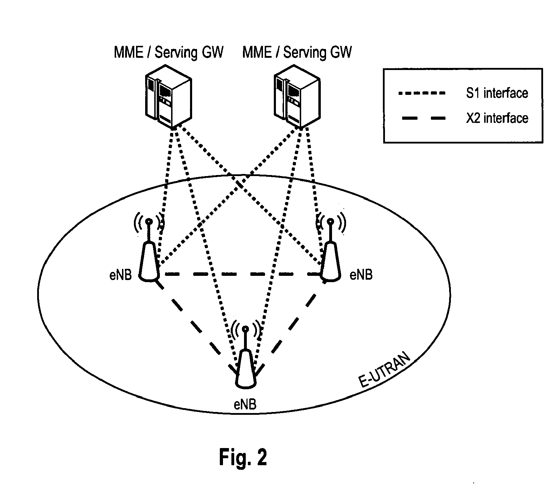

The overall architecture is shown in Fig. 1 and a more detailed representation of the E-UTRAN architecture is given in Fig. 2. The E-UTRAN consists of eNode B, providing the E-UTRA user plane (PDCP/RLC/MAC/PHY) and control plane (RRC) protocol terminations towards the user equipment (UE). The eNode B (eNB) hosts the Physical (PHY), Medium Access Control (MAC), Radio Link Control (RLC), and Packet Data Control Protocol (PDCP) layers that include the functionality of user-plane header-compression and encryption. It also offers Radio Resource Control (RRC) functionality corresponding to the control plane. It performs many functions including radio resource management, admission control, scheduling, enforcement of negotiated uplink QoS, cell information broadcast, ciphering/deciphering of user and control plane data, and compression/decompression of downlink/uplink user plane packet headers. The eNode Bs are interconnected with each other by means of the X2 interface.

The eNode Bs are also connected by means of the S1 interface to the EPC (Evolved Packet Core), more specifically to the MME (Mobility Management Entity) by means of the S1-MME and to the Serving Gateway (SGW) by means of the S1-U. The S1 interface supports a many-to-many relation between MMEs/Serving Gateways and eNode Bs. The SGW routes and forwards user data packets, while also acting as the mobility anchor for the user plane during inter-eNode B handovers and as the anchor for mobility between LTE and other 3GPP technologies (terminating S4 interface and relaying the traffic between 2G/3G systems and PDN GW). For idle state user equipments, the SGW terminates the downlink data path and triggers paging when downlink data arrives for the user equipment. It manages and stores user equipment contexts, e.g. parameters of the IP bearer service, network internal routing information. It also performs replication of the user traffic in case of lawful interception.

The MME is the key control-node for the LTE access-network. It is responsible for idle mode user equipment tracking and paging procedure including retransmissions. It is involved in the bearer activation/deactivation process and is also responsible for choosing the SGW for a user equipment at the initial attach and at time of intra-LTE handover involving Core Network (CN) node relocation. It is responsible for authenticating the user (by interacting with the HSS). The Non-Access Stratum (NAS) signaling terminates at the MME and it is also responsible for generation and allocation of temporary identities to user equipments. It checks the authorization of the user equipment to camp on the service provider's Public Land Mobile Network (PLMN) and enforces user equipment roaming restrictions. The MME is the termination point in the network for ciphering/integrity protection for NAS signaling and handles the security key management. Lawful interception of signaling is also supported by the MME. The MME also provides the control plane function for mobility between LTE and 2G/3G access networks with the S3 interface terminating at the MME from the SGSN. The MME also terminates the S6a interface towards the home HSS for roaming user equipments.

**Uplink Access scheme for LTE**

For uplink transmission, power-efficient user-terminal transmission is necessary to maximize coverage. Single-carrier transmission combined with FDMA (Frequency Division Multiple Access) with dynamic bandwidth allocation has been chosen as the evolved UTRA uplink transmission scheme. The main reason for the preference for single-carrier transmission is the lower peak-to-average power ratio (PAPR), compared to multi-carrier signals (OFDMA - Orthogonal Frequency Division Multiple Access), and the corresponding improved power-amplifier efficiency and assumed improved coverage (higher data rates for a given terminal peak power). During each time interval, eNode B assigns users a unique time/frequency resource for transmitting user data thereby ensuring intra-cell orthogonality. An orthogonal access in the uplink promises increased spectral efficiency by eliminating intra-cell interference. Interference due to multipath propagation is handled at the base station (eNode B), aided by insertion of a cyclic prefix in the transmitted signal.

The basic physical resource used for data transmission consists of a frequency resource of size $BW_{grant}$ during one time interval, e.g. a sub-frame of 0.5 ms, onto which coded information bits are mapped. It should be noted that a sub-frame, also referred to as transmission time interval (TTI), is the smallest time interval for user data transmission. It is however possible to assign a frequency resource $BW_{grant}$ over a longer time period than one TTI to a user by concatenation of sub-frames.

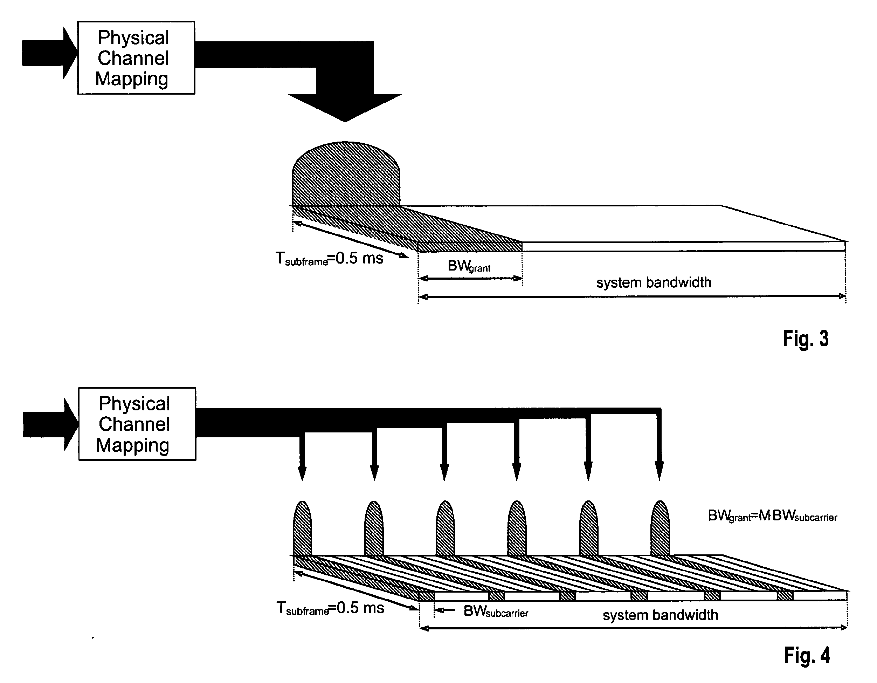

The frequency resource can either be in a localized or distributed spectrum as illustrated in Fig. 3 and Fig. 4. As can be seen from Fig. 3, localized single-carrier is characterized by the transmitted signal having a continuous spectrum that occupies a part of the total available spectrum. Different symbol rates (corresponding to different data rates) of the transmitted signal imply different bandwidths of a localized single-carrier signal.

On the other hand, as shown in Fig. 4, distributed single-carrier is characterized by the transmitted signal having a non-continuous ("comb-shaped") spectrum that is distributed over system bandwidth. Note that, although the distributed single-carrier signal is distributed over the system bandwidth, the total amount of occupied spectrum is, in essence, the same as that of localized single-carrier. Furthermore, for higher/lower symbol rate, the number of "comb-fingers" is increased/reduced, while the "bandwidth" of each "comb finger" remains the same.

At first glance, the spectrum in Fig. 4 may give the impression of a multi-carrier signal where each comb-finger corresponds to a "sub-carrier". However, from the time-domain signal-generation of a distributed single-carrier signal, it should be clear that what is being generated is a true single-carrier signal with a corresponding low peak-to-average power ratio. The key difference between a distributed single-carrier signal versus a multi-carrier signal, such as e.g. OFDM (Orthogonal Frequency Division Multiplex), is that, in the former case, each "sub-carrier" or "comb finger" does not carry a single modulation symbol. Instead each "comb-finger" carries information about all modulation symbols. This creates a dependency between the different comb-fingers that leads to the low-PAPR characteristics. It is the same dependency between the "comb fingers" that leads to a need for equalization unless the channel is frequency-non-selective over the entire transmission bandwidth. In contrast, for OFDM equalization is not needed as long as the channel is frequency-non-selective over the sub-carrier bandwidth.

Distributed transmission can provide a larger frequency diversity gain than localized transmission, while localized transmission more easily allows for channel-dependent scheduling. Note that, in many cases the scheduling decision may decide to give the whole bandwidth to a single user equipment to achieve high data rates.

**Uplink Scheduling scheme for LTE**

The uplink scheme allows for both scheduled access, i.e. controlled by eNodeB, and contention-based access.

In case of scheduled access the user equipment is allocated a certain frequency resource for a certain time (i.e. a time/frequency resource) for uplink data transmission. However, some time/frequency resources can be allocated for contention-based access. Within these time/frequency resources, user equipments can transmit without first being scheduled. One scenario where user equipment is making a contention-based access is for example the random access, i.e. when user equipment is performing initial access to a cell or for requesting uplink resources.

For the scheduled access eNode B scheduler assigns a user a unique frequency/time resource for uplink data transmission. More specifically the scheduler determines

- which user equipment(s) that is (are) allowed to transmit,

- which physical channel resources (frequency),
- Transport format (Transport Block Size (TBS) and Modulation Coding Scheme (MCS)) to be used by the mobile terminal for transmission

The allocation information is signaled to the user equipment via a scheduling grant, sent on the so-called L1/L2 control channel. For simplicity, this downlink channel is referred to the "uplink grant channel" in the following.

A scheduling grant message (also referred to as an resource assignment herein) contains at least information which part of the frequency band the user equipment is allowed to use, the validity period of the grant, and the transport format the user equipment has to use for the upcoming uplink transmission. The shortest validity period is one sub-frame. Additional information may also be included in the grant message, depending on the selected scheme. Only "per user equipment" grants are used to grant the right to transmit on the Uplink Shared Channel UL-SCH (i.e. there are no "per user equipment per RB" grants). Therefore the user equipment needs to distribute the allocated resources among the radio bearers according to some rules, which will be explained in detail in the next section.

Unlike in HSUPA there is no user equipment based transport format selection. The base station (eNodeB) decides the transport format based on some information, e.g. reported scheduling information and QoS information, and user equipment has to follow the selected transport format. In HSUPA eNodeB assigns the maximum uplink resource and user equipment selects accordingly the actual transport format for the data transmissions.

Uplink data transmissions are only allowed to use the time-frequency resources assigned to the user equipment through the scheduling grant. If the user equipment does not have a valid grant, it is not allowed to transmit any uplink data. Unlike in HSUPA, where each user equipment is always allocated a dedicated channel there is only one uplink data channel shared by multiple users (UL-SCH) for data transmissions.

To request resources, the user equipment transmits a resource request message to the eNodeB. This resources request message could for example contain information on the buffer status, the power status of the user equipment and some Quality of Services (QoS) related information. This information, which will be referred to as scheduling information, allows eNodeB to make an appropriate resource allocation. Throughout the document it's assumed that the buffer status is reported for a group of radio bearers. Of course other configurations for the buffer status reporting are also possible. Since the scheduling of radio resources is the most important function in a shared channel access network for determining Quality of Service, there are a number of requirements that should be fulfilled by the uplink scheduling scheme for LTE in order to allow for an efficient QoS management (see 3GPP RAN WG#2 Tdoc. R2- R2-062606, "QoS operator requirements/use cases for services sharing the same bearer", by T-Mobile, NTT DoCoMo, Vodafone, Orange, KPN; available at http://www.3gpp.org/ and incorporated herein by reference):

- Starvation of low priority services should be avoided
- Clear QoS differentiation for radio bearers/services should be supported by the scheduling scheme
- The uplink reporting should allow fine granular buffer reports (e.g. per radio bearer or per radio bearer group) in order to allow the eNode B scheduler to identify for which Radio Bearer/service data is to be sent.
- It should be possible to make clear QoS differentiation between services of different users
- It should be possible to provide a minimum bit-rate per radio bearer

As can be seen from above list one essential aspect of the LTE scheduling scheme is to provide mechanisms with which the operator can control the partitioning of its aggregate cell capacity between the radio bearers of the different QoS classes. The QoS class of a radio bearer is identified by the QoS profile of the corresponding SAE bearer signaled from serving gateway to eNode B as described before. An operator can then allocate a certain amount of its aggregate cell capacity to the aggregate traffic associated with radio bearers of a certain QoS class.

The main goal of employing this class-based approach is to be able to differentiate the treatment of packets depending on the QoS class they belong to. For example, as the load in a cell increases, it should be possible for an operator to handle this by throttling traffic belonging to a low-priority QoS class. At this stage, the high-priority traffic can still experience a low-loaded situation, since the aggregate resources allocated to this traffic is sufficient to serve it. This should be possible in both uplink and downlink direction.

One benefit of employing this approach is to give the operator full control of the policies that govern the partitioning of the bandwidth. For example, one operator's policy could be to, even at extremely high loads, avoid starvation of traffic belonging to its lowest priority QoS Class. The avoidance of starvation of low priority traffic is one of the main requirements for the uplink scheduling scheme in LTE. In current UMTS Release 6 (HSUPA) scheduling mechanism the absolute prioritization scheme may lead to starvation of low priority applications. E-TFC selection (Enhanced Transport Format Combination selection) is done only in accordance to absolute logical channel priorities, i.e. the transmission of high priority data is maximized, which means that low priority data is possibly starved by high priority data. In order to avoid starvation the eNode B scheduler must have means to control from which radio bearers a user equipment transmits data. This mainly influences the design and use of the scheduling grants transmitted on the L1/L2 control channel in downlink. In the following the details of the uplink rate control procedure in LTE is outlined.

**Uplink Rate Control / Logical Channel Prioritization procedure**

For UMTS long term evolution (LTE) uplink transmissions there is a desire that starvation be avoided and greater flexibility in resource assignment between bearers be possible, whilst retaining the per user equipment, rather than per user equipment bearer, resource allocation.

The user equipment has an uplink rate control function which manages the sharing of uplink resources between radio bearers. This uplink rate control function is also referred to as logical channel prioritization procedure in the following. The Logical Channel Prioritization (LCP) procedure is applied when a new transmission is performed, i.e. a Transport block needs to be generated. One proposal for assigning capacity has been to assign resources to each bearer, in priority order, until each has received an allocation equivalent to the minimum data rate for that bearer, after which any additional capacity is assigned to bearers in, for example, priority order.

As will become evident from the description of the LCP procedure given below, the implementation of the LCP procedure residing in the user equipment is based on the token bucket model, which is well known in the IP world. The basic functionality of this model is as follows. Periodically and at a given rate, a token which represents the right to transmit a quantity of data is added to the bucket. When the user equipment is granted resources, it is allowed to transmit data up to the amount represented by the number of tokens in the bucket. When transmitting data the user equipment removes the number of tokens equivalent to the quantity of transmitted data. In case the bucket is full, any further tokens are discarded. For the addition of tokens it could be assumed that the period of the repetition of this process would be every TTI, but it could be easily lengthened such that a token is only added every second. Basically instead of every 1 ms a token is added to the bucket, 1000 tokens could be added every second.

In the following the logical channel prioritization procedure used in LTE Rel. 8 is described (see for further details: 3GPP TS 36.321, "Evolved Universal Terrestrial Radio Access (E-UTRA); Medium Access Control (MAC) protocol specification", version 8.5, available at http://www.3gpp.org and incorporated herein by reference).

RRC controls the scheduling of uplink data by signalling for each logical channel: *priority* where an increasing *priority* value indicates a lower priority level, *prioritisedBitRate* which sets the Prioritized Bit Rate (PBR), *bucketSizeDuration* which sets the Bucket Size Duration (BSD). The idea behind prioritized bit rate is to support for each bearer, including low priority non-GBR bearers, a minimum bit rate in order to avoid a potential starvation. Each bearer should at least get enough resources in order to achieve the prioritized bit rate (PRB).

The UE shall maintain a variable $B_j$ for each logical channel j. $B_j$ shall be initialized to zero when the related logical channel is established, and incremented by the product PBR $\times$ TTI duration for each TTI, where PBR is Prioritized Bit Rate of logical channel j. However, the value of $B_j$ can never exceed the bucket size and if the value of $B_j$ is larger than the bucket size of logical channel j, it shall be set to the bucket size. The bucket size of a logical channel is equal to PBR $\times$ BSD, where PBR and BSD are configured by upper layers.

The UE shall perform the following Logical Channel Prioritization procedure when a new transmission is performed. The uplink rate control function ensures that the UE serves its radio bearer(s) in the following sequence:

1. All the logical channel(s) in decreasing priority order up to their configured PBR (according the number of tokens in the bucket which is denoted by $B_j$);

2. If any resources remain, all the logical channels are served in a strict decreasing priority order (regardless of the value of $B_j$) until either the data for that logical channel or the UL grant is exhausted, whichever comes first. Logical channels configured with equal priority should be served equally.

In case the PBRs are all set to zero, the first step is skipped and the logical channel(s) are served in strict priority order: the UE maximizes the transmission of higher priority data.

The UE shall also follow the rules below during the scheduling procedures above:

- the UE should not segment an RLC SDU (or partially transmitted SDU or retransmitted RLC PDU) if the whole SDU (or partially transmitted SDU or retransmitted RLC PDU) fits into the remaining resources;

- if the UE segments an RLC SDU from the logical channel, it shall maximize the size of the segment to fill the grant as much as possible;

- UE should maximize the transmission of data.

Even though for LTE Rel. 8 only a Prioritized Bit Rate (PBR) is used within the LCP procedure there could be also further enhancements in future releases. For example similar to the PBR, also a maximum bit rate (MBR) per GBR bearer and an aggregated maximum bit rate (AMBR) for all Non-GBR bearers could be provided to the user equipment. The MBR denotes bit rates of traffic per bearer while AMBR denotes a bit rate of traffic per group of bearers. AMBR applies to all Non-GBR SAE Bearers of a user equipment. GBR SAE Bearers are outside the scope of AMBR. Multiple SAE Non-GBR bearers can share the same AMBR. That is, each of those SAE bearers could potentially utilize the entire AMBR, e.g. when the other SAE bearers do not carry any traffic. The AMBR limits the aggregated bit rate that can be expected to be provided by the Non-GBR SAE bearers sharing the AMBR.

**HARQ Protocol operation for unicast data transmissions**

A common technique for error detection and correction in packet transmission systems over unreliable channels is called hybrid Automatic Repeat request (HARQ). Hybrid ARQ is a combination of Forward Error Correction (FEC) and ARQ.

If a FEC encoded packet is transmitted and the receiver fails to decode the packet correctly (errors are usually checked by a CRC (Cyclic Redundancy Check)), the receiver requests a retransmission of the packet

In LTE there are two levels of re-transmissions for providing reliability, namely, HARQ at the MAC layer and outer ARQ at the RLC layer. The outer ARQ is required to handle residual errors that are not corrected by HARQ that is kept simple by the use of a single bit error-feedback mechanism, i.e. ACK/NACK. An N-process stop-and-wait HARQ is employed that has asynchronous re-transmissions in the downlink and synchronous retransmissions in the uplink. Synchronous HARQ means that the re-transmissions of HARQ blocks occur at pre-defined periodic intervals. Hence, no explicit signaling is required to indicate to the receiver the retransmission schedule. Asynchronous HARQ offers the flexibility of scheduling re-transmissions based on air interface conditions. In this case some identification of the HARQ process needs to be signaled in order to allow for a correct combing and protocol operation. In 3GPP, HARQ operations with eight processes is used in LTE Rel. 8. The HARQ protocol operation for Downlink data transmission will be similar or even identical to HSDPA.

In uplink HARQ protocol operation there are two different options on how to schedule a retransmission. Retransmissions are either scheduled by a NACK, synchronous non-adaptive retransmission, or explicitly scheduled by a PDCCH, synchronous adaptive retransmissions. In case of a synchronous non-adaptive retransmission the retransmission will use the same parameters as the previous uplink transmission, i.e. the retransmission will be signaled on the same physical channel resources respectively uses the same modulation scheme. Since synchronous adaptive retransmissions are explicitly scheduled via PDCCH, the eNode B has the possibility to change certain parameters for the retransmission. A retransmission could be for example scheduled on a different frequency resource in order to avoid fragmentation in the uplink, or the eNode B could change the modulation scheme or alternatively indicate user equipment what redundancy version to use for the retransmission. It should be noted that the HARQ feedback (ACK/NACK) and PDCCH signaling occurs at the same timing. Therefore user equipment only needs to check once whether a synchronous non-adaptive retransmission is triggered, only NACK is received, or whether the eNode B requests a synchronous adaptive retransmission, i.e. PDCCH is signaled.

**L1/L2 Control Signaling**

In order to inform the scheduled users about their allocation status, transport format and other data related information (e.g. HARQ) L1/L2 control signaling needs to be transmitted on the downlink along with the data. The control signaling needs to be multiplexed with the downlink data in a sub-frame (assuming that the user allocation can change from sub-frame to sub-frame). Here, it should be noted, that user allocation might also be performed on a TTI (Transmission Time Interval) basis, where the TTI length is a multiple of the sub-frames. The TTI length may be fixed in a service area for all users, may be different for different users, or may even by dynamic for each user. Generally, then the L1/2 control signaling needs only be transmitted once per TTI. The L1/L2 control signaling is transmitted on the Physical Downlink Control Channel (PDCCH). It should be noted that assignments for uplink data transmissions, uplink grants, are also transmitted on the PDCCH.

Generally, the PDCCH information sent on the L1/L2 control signaling may be separated into the Shared Control Information (SCI) and Dedicated Control Information (DCI).

*Shared Control Information (SCI)*

Shared Control Information (SCI) carries so-called Cat 1 information. The SCI part of the L1/L2 control signaling contains information related to the resource allocation (indication). The SCI typically contains the following information:

- User identity, indicating the user which is allocated

- RB allocation information, indicating the resources (Resource Blocks, RBs) on which a user is allocated. Note, that the number of RBs on which a user is allocated can be dynamic.

- Duration of assignment (optional) if an assignment over multiple sub-frames (or TTIs) is possible

Depending on the setup of other channels and the setup of the Dedicated Control Information (DCI), the SCI may additionally contain information such as ACK/NACK for uplink transmission, uplink scheduling information, information on the DCI (resource, MCS, etc.).

*Dedicated Control Information (DCI)*

Dedicated Control Information (DCI) carries the so-called Cat 2/3 information. The DCI part of the L1/L2 control signaling contains information related to the transmission format (Cat 2) of the data transmitted to a scheduled user indicated by Cat 1. Moreover, in case of application of (hybrid) ARQ it carries HARQ (Cat 3) information. The DCI needs only to be decoded by the user scheduled according to Cat 1. The DCI typically contains information on:

- Cat 2: Modulation scheme, transport-block (payload) size (or coding rate), MIMO related information, etc. Note, either the transport-block (or payload size) or the code rate can be signaled. In any case these parameters can be calculated from each other by using the modulation scheme information and the resource information (number of allocated RBs).

- Cat 3: HARQ related information, e.g. hybrid ARQ process number, redundancy version, retransmission sequence number

*L1/L2 control signaling information for Downlink Data Transmission*

Along with the downlink packet data transmission, L1/L2 control signaling is transmitted on a separate physical channel (PDCCH). This L1/L2 control signaling typically contains information on:

- The physical channel resource(s) on which the data is transmitted (e.g. subcarriers or subcarrier blocks in case of OFDM, codes in case of CDMA). This information allows the user equipment (receiver) to identify the resources on which the data is transmitted.

- The transport Format, which is used for the transmission. This can be the transport block size of the data (payload size, information bits size), the MCS (Modulation and Coding Scheme) level, the Spectral Efficiency, the code rate, etc. This information (usually together with the resource allocation) allows the user equipment (receiver) to identify the information bit size, the modulation scheme and the code rate in order to start the demodulation, the de-rate-matching and the decoding process. In some cases the modulation scheme maybe signaled explicitly.

- HARQ information:

- Process number: Allows the user equipment to identify the HARQ process on which the data is mapped.

- Sequence number or new data indicator: Allows the user equipment to identify if the transmission is a new packet or a retransmitted packet.

- Redundancy and/or constellation version: Tells the user equipment, which hybrid ARQ redundancy version is used (required for de-rate-matching) and/or which modulation constellation version is used (required for demodulation)

- user equipment Identity (user equipment ID): Tells for which user equipment the L1/L2 control signaling is intended for. In typical implementations this information is used to mask the CRC of the L1/L2 control signaling in order to prevent other user equipments to read this information.

*L1/L2 control signaling information for Uplink Data Transmission*

To enable an uplink packet data transmission, L1/L2 control signaling is transmitted on the downlink (PDCCH) to tell the user equipment about the transmission details. This L1/L2 control signaling typically contains information on:

- The physical channel resource(s) on which the user equipment should transmit the data (e.g. subcarriers or subcarrier blocks in case of OFDM, codes in case of CDMA).

- The transport format, the user equipment should use for the transmission. This can be the transport block size of the data (payload size, information bits size), the MCS (Modulation and Coding Scheme) level, the Spectral Efficiency, the code rate, etc. This information (usually together with the resource allocation) allows the user equipment (transmitter) to pick the information bit size, the modulation scheme and the code rate in order to start the modulation, the rate-matching and the encoding process. In some cases the modulation scheme maybe signaled explicitly.

- Hybrid ARQ information:

- Process number: Tells the user equipment from which hybrid ARQ process it should pick the data.

- Sequence number or new data indicator: Tells the user equipment to transmit a new packet or to retransmit a packet.

- Redundancy and/or constellation version: Tells the user equipment, which hybrid ARQ redundancy version to use (required for rate-matching) and/or which modulation constellation version to use (required for modulation).

- user equipment Identity (user equipment ID): Tells which user equipment should transmit data. In typical implementations this information is used to mask the CRC of the L1/L2 control signaling in order to prevent other user equipments to read this information.

There are several different flavors how to exactly transmit the information pieces mentioned above. Moreover, the L1/L2 control information may also contain additional information or may omit some of the information. E.g.:

- HARQ process number may not be needed in case of a synchronous HARQ protocol.

- A redundancy and/or constellation version may not be needed if Chase Combining is used (always the same redundancy and/or constellation version) or if the sequence of redundancy and/or constellation versions is pre defined.

- Power control information may be additionally included in the control signaling.

- MIMO related control information, such as e.g. pre-coding, may be additionally included in the control signaling.

- In case of multi-codeword MIMO transmission transport format and/or HARQ information for multiple code words may be included.

For uplink resource assignments (PUSCH) signaled on PDCCH in LTE, the L1/L2 control information does not contain a HARQ process number, since a synchronous HARQ protocol is employed for LTE uplink. The HARQ process to be used for an uplink transmission is given by the timing. Furthermore it should be noted that the redundancy version (RV) information is jointly encoded with the transport format information, i.e. the RV info is embedded in the transport format (TF) field. The TF respectively MCS field has for example a size of 5 bits, which corresponds to 32 entries. 3 TF/MCS table entries are reserved for indicating RVs 1, 2 or 3. The remaining MCS table entries are used to signal the MCS level (TBS) implicitly indicating RV0. The size of the CRC field of the PDCCH is 16 bits.

For downlink assignments (PDSCH) signaled on PDCCH in LTE the Redundancy Version (RV) is signaled separately in a two-bit field. Furthermore the modulation order information is jointly encoded with the transport format information. Similar to the uplink case there is 5 bit MCS field signaled on PDCCH. Three of the entries are reserved to signal an explicit modulation order, providing no Transport format (Transport block) info. For the remaining 29 entries modulation order and Transport block size info are signaled.

**Semi-persistent Scheduling (SPS)**

In the downlink and uplink, the scheduling eNodeB dynamically allocates resources to user equipments at each transmission time interval via the L1/L2 control channel(s) (PDCCH(s)) where the user equipments are addressed via their specific C-RNTIs. The CRC of a PDCCH is masked with the addressed user equipment's C-RNTI (so-called dynamic PDCCH). Only a user equipment with a matching C-RNTI can decode the PDCCH content correctly, i.e. the CRC check is positive. This kind of PDCCH signaling is also referred to as dynamic (scheduling) grant. A user equipment monitors at each transmission time interval the L1/L2 control channel(s) for a dynamic grant in order to find a possible allocation (downlink and uplink) it is assigned to.

In addition, E-UTRAN can allocate uplink/downlink resources for initial HARQ transmissions persistently. When required, retransmissions are explicitly signaled via the L1/L2 control channel(s). Since retransmissions are scheduled, this kind of operation is referred to as semi-persistent scheduling (SPS), i.e. resources are allocated to the user equipment on a semi-persistent basis (semi-persistent resource allocation). The benefit is that PDCCH resources for initial HARQ transmissions are saved. For details on semi-persistent scheduling, see 3GPP TS 36.300, "Evolved Universal Terrestrial Radio Access (E-UTRA) and Evolved Universal Terrestrial Radio Access Network (E-UTRAN); Overall description; Stage 2 (Release 8)", version 8.7.0, section 11, January 2009 or 3GPP TS 36.321, section 5.10 both available at http://www.3gpp.org and incorporated herein by reference.

One example for a service, which might be scheduled using semi-persistent scheduling is Voice over IP (VoIP). Every 20 ms a VoIP packet is generated at the codec during a talk-spurt. Therefore eNode B could allocated uplink or respectively downlink resource persistently every 20 ms, which could be then used for the transmission of Voice over IP packets. In general, semi-persistent scheduling is beneficial for services with a predictable traffic behavior, i.e. constant bit rate, packet arrival time is periodic.

The user equipment also monitors the PDCCHs in a sub-frame where it has been allocated resources for an initial transmission persistently. A dynamic (scheduling) grant, i.e. PDCCH with a C-RNTI-masked CRC, can override a semi-persistent resource allocation. In case the user equipment finds its C-RNTI on the L1/L2 control channel(s) in the sub-frames where the sub-frame has a semi-persistent resource assigned, this L1/L2 control channel allocation overrides the semi-persistent resource allocation for that transmission time interval and the user equipment does follow the dynamic grant. When sub-frame doesn't find a dynamic grant it will transmit/receive according to the semi-persistent resource allocation.

The configuration of semi-persistent scheduling is done by RRC signaling. For example the periodicity, i.e. PS_PERIOD, of the persistent allocation is signaled within Radio resource Control (RRC) signaling. The activation of a persistent allocation and also the exact timing as well as the physical resources and transport format parameters are sent via PDCCH signaling. Once semi-persistent scheduling is activated, the user equipment follows the semi-persistent resource allocation according to the activation SPS PDCCH every semi-persistent scheduling interval (SPS interval). Essentially the user equipment stores the SPS activation PDCCH content and follows the PDCCH with the signaled periodicity.

**Further Advancements for LTE (LTE-A)**

The frequency spectrum for IMT-Advanced was decided at the World Radiocommunication Conference 2007 (WRC-07) last November [4]. Although the overall frequency spectrum for IMT-Advanced was decided, the actual available frequency bandwidth is different according to each region or country. Following the decision on the available frequency spectrum outline, however, standardization of a radio interface started in the 3rd Generation Partnership Project (3GPP). At the 3GPP TSG RAN #39 meeting, the Study Item description on "Further Advancements for E-UTRA (LTE-Advanced)" was approved. The study item covers technology components to be considered for the evolution of E-UTRA, e.g. to fulfill the requirements on IMT-Advanced. Two major technology components which are currently under consideration for LTE-A are described in the following.

**LTE-A Support of wider bandwidth**

Carrier aggregation, where two or more component carriers are aggregated, is considered for LTE-Advanced in order to support wider transmission bandwidths e.g. up to 100 MHz and for spectrum aggregation.

A terminal may simultaneously receive or transmit on one or multiple component carriers depending on its capabilities:

- An LTE-Advanced terminal with reception and/or transmission capabilities for carrier aggregation can simultaneously receive and/or transmit on multiple component carriers. There is one Transport Block (in absence of spatial multiplexing) and one HARQ entity per component carrier.

- An LTE Rel. 8 terminal can receive and transmit on a single component carrier only, provided that the structure of the component carrier follows the Rel. 8 specifications.

It shall be possible to configure all component carriers LTE Release 8 compatible, at least when the aggregated numbers of component carriers in the uplink and the downlink are same. Consideration of non-backward-compatible configurations of LTE-A component carriers is not precluded

**LTE-A Support of Relaying functionality**

Relaying is considered for LTE-Advanced as a tool to improve e.g. the coverage of high data rates, group mobility, temporary network deployment, the cell-edge throughput and/or to provide coverage in new areas.

The relay node is wirelessly connected to radio-access network via a donor cell. The connection can be

- inband, in which case the network-to-relay link share the same band with direct network-to-user equipment links within the donor cell. Rel. 8 user equipments should be able to connect to the donor cell in this case.

- outband, in which case the network-to-relay link does not operate in the same band as direct network-to-user equipment links within the donor cell

With respect to the knowledge in the user equipment, relays can be classified into

- transparent, in which case the user equipment is not aware of whether or not it communicates with the network via the relay.

- non-transparent, in which case the user equipment is aware of whether or not it is communicating with the network via the relay.

Depending on the relaying strategy, a relay may

- be part of the donor cell

- control cells of its own

In the case the relay is part of the donor cell, the relay does not have a cell identity of its own (but may still have a relay ID). At least part of the RRM is controlled by the eNodeB to which the donor cell belongs, while parts of the RRM may be located in the relay. In this case, a relay should preferably support also LTE Rel. 8 user equipments. Smart repeaters, decode-and-forward relays and different types of L2 relays are examples of this type of relaying.

In the case the relay is in control of cells of its own, the relay controls one or several cells and a unique physical-layer cell identity is provided in each of the cells controlled by the relay. The same RRM mechanisms are available and from a user equipment perspective there is no difference in accessing cells controlled by a relay and cells controlled by a "normal" eNodeB. The cells controlled by the relay should support also LTE Rel. 8 user equipments. Self-backhauling (L3 relay) uses this type of relaying.

In Figure 4 there is an exemplary LTE-A system shown which utilizes relay nodes (RN). The wireless interface between eNode B and RN, which connects a RN with the radio access network, is referred to as Y3 interface.

As already outlined above in LTE Rel. 8 uplink scheduling, respectively QoS control for uplink transmissions is solely controlled by the eNode B. A user equipment follows the scheduling decision made by eNode B signaled by means of scheduling grants on the PDCCH to the user equipment. The eNode B selects the HARQ operation point, i.e. the target Block Error Rate (BLER), based on the QoS requirements of the logical channels which are included in an uplink transmission. For example, the block error rate of an delay-critical service like VoIP is different compared to a best-effort services which is not delay-sensitive.

Similarly the HARQ operation strategy, e.g. number of scheduled HARQ retransmissions by the eNodeB, is also determined depending on the QoS requirements of the logical channels included in an uplink transmission, i.e. transport block. Again for a delay-critical service like VoIP the number of scheduled retransmissions by the eNodeB will be less compared to a best-effort service.

Basically it can be concluded that in order to allow for an efficient QoS control of uplink transmissions, the eNodeB needs to know data of which logical channels will be included in a transport block. Essentially, the eNodeB needs to know how user equipment shares the resources assigned by a scheduling grant among the configured radio bearers when generating a transport block. As already mentioned the Buffer Status Reporting procedure is used to provide the eNodeB with information about the amount of data available for transmission in the uplink buffers of the user equipment. The reporting is done periodically and event-triggered.

Ideally the eNodeB knows the user equipment's buffer status and can therefore re-enacts the logical channel prioritization procedure performed by user equipment when making a scheduling decision. This ensures that the eNodeB knows what kind of logical channels will be included in a scheduled uplink transmission and hence allows for choosing a correct block error rate respectively HARQ operation strategy. Since there is only one transport bock per TTI for UL-SCH transmissions in LTE Rel. 8 it can be concluded that in LTE Rel. 8 an efficient QoS control/uplink scheduling is possible.

However when now considering LTE-A where bandwidth aggregation is supported there multiple transport blocks can be transmitted in one TTI in the uplink. As explained before a LTE-A-capable user equipment can receive multiple uplink resource assignments for different component carriers in one TTI. Consequently the user equipment needs to transmit in one TTI multiple transport blocks, on the different component carriers in the uplink, i.e. there will be only one transport block (TB) (in absence of spatial multiplexing) per component carrier.

Due to the fact that in LTE-A there might be more than one transport block per TTI in the uplink, there is basically one more degree of freedom when generating the transport blocks in the user equipment. When the eNodeB doesn't know the order in which the user equipment processes the received uplink resource assignments, i.e. in which order user equipment generates the transport blocks, the eNodeB consequently cannot know the content of a transport block generated by the user equipment. Essentially, the eNodeB is not aware of how the user equipment maps the data of the different logical channels to the different transport blocks. Therefore, it's also not possible to efficiently control the QoS of uplink transmissions since this would require the knowledge of the logical channels included in a transport block at the eNodeB. For example, the eNodeB might schedule a huge number of HARQ retransmissions for a given transport block under the assumption that the transport block contains data of a best effort service even though the user equipment actually put data of some delay-critical service like a VoIP packet in this transport block. This would obviously lead to an inefficient usage of the uplink resources.

## SUMMARY OF THE INVENTION

One object of the invention is to propose strategies and methods for generating plural transport blocks within a given time constraint. Advantageously, these strategies and methods may facilitate the generation of the transports blocks within a time constraint as short as 4 ms between receiving uplink resource assignments and the transmission of the transport blocks on the resources allocated by the uplink resource assignments.

A further object of the invention is to propose schemes allowing a scheduler to gain additional knowledge of the content of transport blocks transmitted on uplink resources allocated by plural uplink resource assignments to facilitate more efficient scheduling of the uplink transmissions.

At least one of these objects is solved by the subject matter of the independent claims. Advantageous embodiments are subject to the dependent claims.

One aspect of the invention is the introduction of a prioritization of the uplink resource assignments, so that multiple uplink resource assignments can be ranked in the mobile terminal in a priority order. The prioritization of the uplink resource assignments is used to determine the order in which the individual transport blocks corresponding to the uplink resource assignments are filled, respectively how the data of different logical channels is multiplexed to the transport blocks for transmission in the uplink.

According to one exemplary embodiment of the invention, a method for generating transport blocks for uplink transmission via an air interface in a mobile communication system is provided. In this method, a mobile terminal (e.g. a user equipment in a 3GPP LTE-A system) receives plural uplink resource assignments in one transmission time interval (TTI) on a control channel for allocating respective radio resources for uplink transmission to the mobile terminal. The uplink resource assignments are ranked according to a priority order. Further, the mobile terminal generates respective transport blocks for transmission on the allocated respective radio resources. Thereby, the data of different logical channels is multiplexed to the transport blocks according to the priority order of their corresponding uplink resource assignment.

In more detail, the multiplexing of the data to the transport blocks in the given priority order of their corresponding uplink resource assignments could be for example realized in that the transport blocks are sequentially filled with data of the logical channels in the priority order of their corresponding uplink resource assignments and logical channel priorities. Thereby, resource assignments allocating uplink radio resources on semi-persistently could have the highest priority.

There are different possibilities how the mobile terminal can be made aware of the priority order of the uplink resource assignments. For example, in one embodiment of the invention the priority order of the uplink resource assignments is determined based on the priority indicated for each uplink resource assignment. For example, the priority of an uplink resource assignment could be comprised within the uplink resource assignment itself. In one exemplary implementation the control channel conveying the uplink resource assignments comprises a field for indicate their respective priority. In a further, more advanced implementation this field is used to indicate the priority only for allocations of initial transmission of a transport block, and the field may optionally be reused for the signaling of other control information, if the uplink resource assignment is related to a retransmission of a transport block.

In an alternative embodiment of the invention, each uplink resource assignment is allocating radio resources on one of plural component carriers and the component carriers are assigned respective priorities. In this case the priority order of the uplink resource assignments may be determined according to the priorities of the component carriers on which resources are allocated by the uplink resource assignments. For example, higher layer signaling, such as MAC control signaling or radio resource control (RRC) signaling could be utilized to signal the priority order of the component carriers to the mobile terminal.

A further aspect of the invention is the generation process of the transport blocks. The invention is proposing different optimized logical channel prioritization procedures that can handle plural uplink resource assignments for uplink transmissions in a given transmission time interval or sub-frame. One of the proposed optimized logical channel prioritization procedures is employing a virtual transport block so that the logical channel prioritization procedure can be jointly performed for all uplink resource assignments received simultaneously. Another approach suggested herein is the parallelization of logical channel prioritization procedures. In this approach also the concept of virtual transport blocks is used, but still multiple logical channel prioritization procedures for subsets of the uplink resource assignments are performed in parallel.

In accordance with this aspect of the invention, a further embodiment is relating to a method for generating transport blocks based on the priority order of their corresponding uplink resource assignments. Each uplink resource assignments can be considered to yield a transport block size. In this method, the transport block sizes yielded by the uplink resource assignments are first accumulated to obtain a virtual transport block size of a virtual transport block. Next, one joint logical channel prioritization procedure over all uplink resource assignments is performed to thereby fill the virtual transport block with data of logical channels according to their logical channel priority. Subsequently, the virtual transport block is divided into transport blocks to match the uplink resource assignments.

This division is performed such that the sizes of the transport blocks correspond to transport block sizes of their uplink resource assignments and the virtual transport block is divided into the transport blocks according to the priority order of the uplink resource assignments. This may be for example implemented such that higher priority data of the virtual transport blocks (i.e. data from logical channels with high logical channel priorities) is mapped to the transport block or blocks transmitted on uplink resources allocated by high priority uplink resource assignment(s), and vice versa. In this method, the transport blocks may be sequentially filled with data of the virtual transport block in the priority order of their corresponding uplink resource assignments.

Expressed more mathematically, it may be assumed that there are $n$ uplink resource assignments $RA_i, i \in [1,...,n]$ yielding respective transport block sizes $TBS_i, i \in [1,...,n]$.

Furthermore, the virtual transport size is $vTBS = \sum_{i=1}^{n} TBS_i$. The virtual transport block can be represented by a sequence of bits $[B_0,...,B_{vTBS-1}]$. Similarly, the n transport blocks corresponding to the n uplink resource assignments can be represented by sequences of bits $\left[b_0^i,...,b_{TBS_i-1}^i\right], i \in [1,...,n]$. In one embodiment of the invention, the virtual transport block is divided into the n transport blocks, such that

$$\left[b_0^i,...,b_{TBS_i-1}^i\right] = \left[B_{\sum_{k=1}^{i} TBS_{k-1}},...,B_{\sum_{k=1}^{i} TBS_{k-1}+TBS_i-1}\right]$$

where $TBS_0 = 0$ and $i \in [1,...,n]$.

As indicated above, still accordance with an aspect of the invention, another embodiment of the invention is proposing an alternative method for generating transport blocks based on the priority order of their corresponding uplink resource assignment. In this method the logical channels having data pending for uplink transmission are grouped according to their logical channel priorities to obtain a number of n logical channel groups. The number of $n$ logical channel groups corresponds to a number of n logical channel prioritization procedures that can be performed in parallel by a mobile terminal. Somewhat similar to the previous method, the transport block sizes yielded by the uplink resource assignments are accumulated according to a priority order of their corresponding uplink resource assignments to obtain a number of n virtual transport block sizes of virtual transport blocks. Furthermore, each virtual transport block is associated to a logical channel group. Next, n logical channel prioritization procedures are performed by the mobile terminal in parallel. A joint logical channel prioritization procedure is performed for each virtual transport block to thereby fill the virtual transport block with data of logical channels of the associated logical channel group. The virtual transport blocks obtained by the n logical channel prioritization procedures are then divided into transport blocks, wherein the sizes of the transport blocks correspond to transport block sizes of their uplink resource assignments.

Please note that when accumulating the transport block sizes yielded by the uplink resource assignments to obtain the n virtual transport blocks, a virtual transport block may be formed by accumulating one or more uplink resource assignments. For example, if there are three uplink resource assignments, and there are two virtual transport blocks to be formed, for example, the highest priority uplink resource assignment could define the transport block of the (highest priority/ranked) first virtual transport block, while the remaining two uplink resource assignments are accumulated to form a second (lower priority/ranked) virtual transport block. Similarly, the division of the virtual transport blocks into transport blocks corresponding in size to the respective uplink resource assignments may not be required each virtual transport block. In the example above, the (highest priority/ranked) first virtual transport block is corresponding in its size to the transport block size yielded by the highest priority uplink resource assignment, so that the virtual transport block and the transport block for this highest priority uplink resource assignment is equivalent. For the (lower priority/ranked) virtual transport block, two uplink resource assignments have been accumulated, so that the virtual transport block is to be divided into two transport blocks with transport block sizes corresponding to the two uplink resource assignments respectively.

In a more detailed implementation according to another embodiment of the invention, the mobile terminal is assumed to be able to process up to an integer number of *l* logical channels per logical channel prioritization procedure while meeting a time constraint for the generation of the transport blocks. The mobile terminal is further assumed to be able to perform j logical channel prioritization procedures in parallel while meeting said time constraint. In this embodiment, the generation method for the transport blocks ensures that a maximum of *l* logical channels is grouped into a respective one of the first $n$-1 logical channel groups in ascending order of their logical channel priorities, and that the association of logical channel groups and virtual transport blocks is such that the logical channel groups carrying the highest logical channel priority data is associated to the virtual transport block accumulating the transport block sizes yielded by the highest priority uplink resource assignments, and such that the logical channel groups carrying the lowest logical channel priority data is associated to the virtual transport block accumulating the transport block sizes yielded by the lowest priority uplink resource assignments.

Another aspect of the invention is related to the implementation of the methods for generating transport blocks in hardware and software. In accordance with this aspect of the invention, another embodiment of the invention is providing a mobile terminal for generating transport blocks for uplink transmission via an air interface in a mobile communication system. This mobile terminal comprises a receiver that receives at a mobile terminal plural uplink resource assignments on a control channel in one transmission time interval for allocating respective radio resources for uplink transmission to the mobile terminal. As indicated above, the uplink resource assignments are ranked according to a priority order. The mobile terminal is further equipped with a transport block generation unit that is generating respective transport blocks for transmission on the allocated respective radio resources. The unit ensures that data of different logical channels is multiplexed to the transport blocks according to the priority order of their corresponding uplink resource assignment.

In a further embodiment of the invention, the mobile terminal comprises a transmitter for transmitting the generated transport blocks within a transmission time interval on plural component carriers. The transmitter may be further adapted to transmit the transport blocks via a shared uplink channel on radio resources allocated by the resource assignments.

According to another embodiment of the invention the mobile terminal's receiver is adapted to receive information on the priority order of the uplink resource assignments via MAC control signaling or radio resource signaling. For instance, the priority order could be signaled within a MAC control element of a MAC message or within an Information Element (IE) of a RRC message.

Another exemplary embodiment of the invention is related to a transport block generation unit for generating transport blocks based on the priority order of their corresponding uplink resource assignments. The transport block generation unit comprises an accumulation unit for accumulating the transport block sizes yielded by the uplink resource assignments to obtain a virtual transport block size of a virtual transport block. Further, it comprises a logical channel prioritization unit for performing a joint logical channel prioritization procedure over all uplink resource assignments to thereby fill the virtual transport block with data of logical channels according to their logical channel priority, and a division unit for dividing the virtual transport block into transport blocks, wherein the sizes of the transport blocks correspond to transport block sizes of their uplink resource assignments and the virtual transport block is divided into the transport blocks according to the priority order of the uplink resource assignments.

The transport block generation unit according to a further exemplary embodiment of the invention comprises a dividing unit that sequentially fills the transport blocks with data of the virtual transport block in the priority order of their corresponding uplink resource assignments.

In an alternative embodiment of the invention, a transport block generation unit is provided that generates transport blocks based on the priority order of their corresponding uplink resource assignments. According to this embodiment of the invention, the transport block generation unit comprises a grouping unit for grouping logical channels having data pending for uplink transmission according to their logical channel priorities to obtain a number of n logical channel groups. The number of n logical channel groups corresponds to a number of $n$ logical channel prioritization procedures that can be performed in parallel by the transport block generation unit.

The transport block generation unit further comprises an accumulation unit for accumulating the transport block sizes yielded by the uplink resource assignments according to a priority order of their corresponding uplink resource assignments to obtain a number of n virtual transport block sizes of virtual transport blocks, and a processing unit for associating each virtual transport block to a logical channel group. Moreover, it includes a logical channel prioritization unit for performing n logical channel prioritization procedures in parallel, wherein the logical channel prioritization unit performs a joint logical channel prioritization procedure for each virtual transport block and to thereby fill the virtual transport block with data of logical channels of the associated logical channel group. Moreover, this transport block generation unit also includes a dividing unit for dividing the virtual transport blocks into transport blocks, wherein the sizes of the transport blocks correspond to the transport block sizes of their uplink resource assignments.

In a more detailed embodiment of the invention, the transport block generation unit is adapted to process an integer number of *l* logical channels per logical channel prioritization procedure while meeting a time constraint for the generation of the transport blocks, and wherein the transport block generation unit is adapted to perform j logical channel prioritization procedures in parallel while meeting said time constraint. The grouping unit groups a maximum of *l* logical channels into a respective one of the first *n*-1 logical channel groups in ascending order of their logical channel priorities. The processing unit further associates the logical channel groups and virtual transport blocks such that the logical channel groups carrying the highest logical channel priority data is associated to the virtual transport block accumulating the transport block sizes yielded by the highest priority uplink resource assignments, and such that the logical channel groups carrying the lowest logical channel priority data is associated to the virtual transport block accumulating the transport block sizes yielded by the lowest priority uplink resource assignments.

Another embodiment of the invention is related to a computer readable medium storing instructions that, when executed by a processor of a mobile terminal, cause the mobile terminal to generate transport blocks for uplink transmission via an air interface in a mobile communication system, by receiving at a mobile terminal plural uplink resource assignments on a control channel in one transmission time interval for allocating respective radio resources for uplink transmission to the mobile terminal, wherein the uplink resource assignments are ranked according to a priority order, and generating respective transport blocks for transmission on the allocated respective radio resources, wherein the data of different logical channels is multiplexed to the transport blocks according to the priority order of their corresponding uplink resource assignment.

Another readable medium according to a further embodiment of the invention stores instructions that, when executed by a processor of a mobile terminal, cause the mobile terminal to generate transport blocks based on the priority order of their corresponding uplink resource assignments, each uplink resource assignments yielding a transport block size, by accumulating the transport block sizes yielded by the uplink resource assignments to obtain a virtual transport block size of a virtual transport block, performing a joint logical channel prioritization procedure over all uplink resource assignments to thereby fill the virtual transport block with data of logical channels according to their logical channel priority, and dividing the virtual transport block into transport blocks, wherein the sizes of the transport blocks correspond to transport block sizes of their uplink resource assignments and the virtual transport block is divided into the transport blocks according to the priority order of the uplink resource assignments.

In another embodiment, a computer readable medium stores instructions that, when executed by a processor of a mobile terminal, cause the mobile terminal to generate transport blocks based on the priority order of their corresponding uplink resource assignments, each uplink resource assignment yielding a transport block size, by grouping logical channels having data pending for uplink transmission according to their logical channel priorities to obtain a number of n logical channel groups, wherein the number of n logical channel groups corresponds to a number of n logical channel prioritization procedures that can be performed in parallel by mobile terminal, accumulating the transport block sizes yielded by the uplink resource assignments according to a priority order of their corresponding uplink resource assignments to obtain a number of n virtual transport block sizes of virtual transport blocks, associating each virtual transport block to a logical channel group, performing n logical channel prioritization procedures in parallel, wherein a joint logical channel prioritization procedure is performed for each virtual transport block to thereby fill the virtual transport block with data of logical channels of the associated logical channel group, and dividing the virtual transport blocks into transport blocks, wherein the sizes of the transport blocks correspond to transport block sizes of their uplink resource assignments.

All computer readable media may be further storing instructions that cause the execution of any of the methods for generating transport blocks discussed herein.

## BRIEF DESCRIPTION OF THE FIGURES

In the following the invention is described in more detail in reference to the attached figures and drawings. Similar or corresponding details in the figures are marked with the same reference numerals.

| Fig. 1 | shows an exemplary architecture of a 3GPP LTE system, |
|---|---|
| Fig. 2 | shows an exemplary overview of the overall E-UTRAN architecture of LTE, |
| **Fig. 3 and 4** | show an exemplary localized allocation and distributed allocation of the uplink bandwidth in a single carrier FDMA scheme, |
| Fig. 5 | shows an exemplary overview of the overall E-UTRAN architecture of LTE-A including several relay nodes (RN), |
| Fig. 6 | shows a flow chart of a joint logical channel prioritization procedure for generating multiple transport blocks according to an embodiment of the invention, |
| Fig. 7 | shows the exemplary content of three transport blocks filled with data of logical channels by the joint logical channel prioritization procedure according to Fig. 6 |
| Fig. 8 | shows the exemplary content of three transport blocks filled with data of logical channels by the logical channel prioritization procedure performed sequentially on the three transport blocks individually, |
| Fig. 9 | shows the timing constraints for the generation of a transport block, respectively transport blocks for LTE Rel. 8 respectively LTE-A, and |
| **Fig. 10 to 12** | exemplary content of transport blocks filled with data of logical channels by performing parallel logical channel prioritization procedures according to a different embodiment of the invention. |

## DETAILED DESCRIPTION OF THE INVENTION

The following paragraphs will describe various embodiments of the invention. For exemplary purposes only, most of the embodiments are outlined in relation to an orthogonal single-carrier uplink radio access scheme according to the LTE-Advanced mobile communication system discussed in the Technical Background section above. It should be noted that the invention may be advantageously used for example in connection with a mobile communication system such as the LTE-Advanced communication system previously described, but the invention is not limited to its use in this particular exemplary communication network.

The explanations given in the Technical Background section above are intended to better understand the mostly LTE-Advanced specific exemplary embodiments described herein and should not be understood as limiting the invention to the described specific implementations of processes and functions in the mobile communication network. Nevertheless, the improvements proposed herein may be readily applied in the architectures/systems described in the Technical Background section and may in some embodiments of the invention also make use of standard and improved procedures of theses architectures/systems.

As mentioned in the Technical Background section above, LTE-A supports bandwidth aggregation where multiple transport blocks can be transmitted in one TTI in the uplink on multiple component carriers. Multiple uplink resource assignments for different component carriers in one TTI may therefore be received at a user equipment that need to be properly processed. Consequently the user equipment needs to generate and transmit in one TTI multiple transport blocks on the different component carriers in the uplink, i.e. there will be only one transport block (TB) (in absence of spatial multiplexing) per component carrier.

An exemplary transport block generation procedure for the case that a mobile terminal (e.g. a user equipment in the 3GPP context) receives multiple uplink resource assignments for a single TTI and basically reuses the state-of-the art logical channel prioritization (LCP) procedure as known from LTE Rel. 8 could look like the following. The user equipment performs a logical channel prioritization procedure for each assigned uplink allocation on the corresponding component carrier. The logical channel prioritization procedures are performed sequentially, i.e. the user equipment generates the first transport block according the first uplink resource assignment and then the second transport block according the second uplink resource assignment and so on. The user equipment chooses autonomously in which order to generate the transport blocks, i.e. user equipment chooses in which order the uplink resource assignments are processed. When choosing the order the user equipment may try to optimize for the amount of data transmitted in a TTI, i.e. depending on the transport block generation order the amount of MAC header in a transport block might differ due to the multiplexing of data from different logical channels in one transport block.

As already indicated above, the eNodeB doesn't know the order in which the user equipment processes the received uplink resource assignments, i.e. in which order user equipment generates the transport blocks. As a consequence, the eNodeB does not know the content of the respective transport blocks generated by the user equipment. Therefore, efficient QoS control of uplink transmissions by the eNodeB is not possible. Another potential drawback is the extremely tight timing between the reception of the uplink resource assignments and the point in time the user equipment needs to have generated the transport blocks according to the uplink resource assignments for transmission on the allocated resources.

The invention aims to provide an efficient and tight QoS control for uplink transmissions by a base station (eNodeB or Node B in the 3GPP context) in a scenario where a mobile terminal (user equipment in the 3GPP context) is assigned multiple uplink resources in one transmission time interval (e.g. one or more sub-frames). A first aspect of the invention is to introduce a priority order for the uplink resource assignments (respectively for the transport blocks corresponding thereto) that is considered by the mobile terminal when generating the transport blocks for uplink transmission.

A second aspect of the invention is to optimize the procedures for generating the transport blocks (referred to as logical channel prioritization procedure in this document) for the multiple uplink resource assignments such that also tight timing constraints can be met. Considering for example a LTE Rel. 8 based communication system, the uplink resource assignments are typically received four sub-frames prior to the point in time the corresponding uplink transmission of the transport blocks according the uplink resource assignments take place. Hence, the user equipment typically needs to generate all transport blocks within a time period of 4 ms (considering an LTE Rel. 8 sub-frame duration of 1 ms) starting from the reception of the uplink resource assignments. Sequentially performing several logical channel prioritization procedures for each uplink resource assignment appears challenging by the user equipment within this time period at present.

In accordance with the first aspect of the invention, a prioritization of the uplink resource assignments is introduced so that the multiple uplink resource assignments which are received simultaneously can be ranked in the mobile terminal in a priority order. The prioritization of the uplink resource assignments is used to determine the order in which the individual transport blocks corresponding to the uplink resource assignments are filled, respectively how the data of different logical channels is multiplexed to the transport blocks for transmission in the uplink. For example a mobile terminal first generates the transport block corresponding to the highest priority uplink assignment by means of logical channel prioritization procedure, then the next transport block corresponding to the second highest priority uplink assignment and so forth. The multiplexing of the data to the transport blocks in the given priority order of their corresponding uplink resource assignments could be for example realized in that the transport blocks are sequentially filled with data of the logical channels in the priority order of their corresponding uplink resource assignments and logical channel priorities.

The mobile terminal will process the received uplink resource assignments for one transmission time interval according to the signaled priority order, i.e. the mobile terminal will start with the highest priority uplink resource assignment and then continues processing in decreasing priority order. Due to the introduction of a priority order for the uplink resource assignments, the mobile terminal's behavior is deterministic from a eNodeB point of view in terms of logical channel to transport block mapping so that efficient QoS control for uplink transmissions becomes possible. For example, the eNodeB could implement a QoS control in a similar fashion to the QoS control mechanisms in a LTE Rel. 8 system as discussed in the Technical Background section.

Besides pre-configuration, there are different possibilities how the mobile terminal can be made aware of the priority order of the uplink resource assignments. For example, one solution for informing the user equipment on the priority order of the uplink resource assignments to be considered in the generation of the transport blocks may be to indicate for each uplink resource assignment an individual absolute priority. For example, the priority of an uplink resource assignment could be comprised within the uplink resource assignment itself. In one exemplary embodiment of the invention, a LTE-A communication system is assumed. In this exemplary embodiment, a priority for uplink resource assignments is signaled to the user equipment. The user equipment considers the priority order when generating the transport blocks, respectively performing a logical channel prioritization procedure. In more detail, when signaling an uplink scheduling grant (uplink resource assignment) on the PDCCH to the user equipment, the PDCCH may for example contain a priority field, which indicates the priority of the corresponding assignment. Based on the signaled priorities for the uplink scheduling grants, the user equipment is able to generate a priority order of the grants. Assuming that there can be up to five simultaneous uplink resource assignments in one TTI, there priority indicates for example a value between 1 and 5, 1 denoting the highest priority and 5 denoting the lowest priority. Compared to the presently defined LTE Rel. 8 signaling, this exemplary embodiment of the invention requires a new information field to be introduced on a PDCCH which carries an uplink resource assignment, e.g. PDCCH with DCI format 0, so signal the priority of the uplink resource assignment.

In an alternative embodiment of the invention, each uplink resource assignment is allocating radio resources on one of plural component carriers and the component carriers are assigned respective priorities. In this case the priority order of the uplink resource assignments respectively their corresponding transport blocks can be determined by the mobile terminal according to the priorities of the component carriers uplink resource assignments are received for. For example, higher layer signaling, such as MAC control signaling or RRC signaling could be utilized to signal the priority order of the component carriers to the mobile terminal.

According to an embodiment of the invention, one possibility to indicate the priorities / priority order of the uplink resource assignments is that each uplink resource assignment contains a priority field on the PDCCH which indicates the priority of the corresponding uplink grant. The mobile terminal then treats the received uplink resource assignments, i.e. builds the transport blocks, in decreasing priority order starting with the highest priority assignment.

Another variant may be to (once) signal the priority order of the uplink resource assignments respectively Component Carriers (CoCa), which needs to be accounted for within logical channel prioritization procedure rather than signaling the priority of each uplink resource assignment separately on the corresponding PDCCH. This priority order could be only signaled on one PDCCH, which might be also referred to as anchor or serving PDCCH. For example the priority order could indicate CoCa2>CoCa1>CoCa3>CoCa4>CoCa5, which would basically mean that uplink resource assignment received on CoCa2 have the highest priority, assignment received on CoCa1 the second highest priority and so on. Under the assumption of having at most five component carriers in an LTE-A system, there are 120 different priority orders possible, which would be equivalent to 7 bits. Alternatively there could be a number of pre-configured priority orders and only an index pointing to one of the preconfigured priority order is signaled.

Signaling the priority order on the PDCCH allows for the highest flexibility, i.e. priority order can be changed on a TTI basis. However, obviously some new PDCCH field needs to be introduced, i.e. new PDCCH format.

Rather than using physical control signaling, in another embodiment of the invention the priority order could be also signaled using higher layer signaling like MAC control signaling or RRC signaling. In case of MAC control signaling a new MAC control element is introduced which indicates the priority order a mobile terminal should treat received uplink resource assignments. In case of RRC signaling some new information element (IE) is introduced which indicates the priority order.

One benefit of using higher signaling compared to physical layer signaling, is that there would be no impact to the PDCCH DCI formats. On the downside a reconfiguration of the priority order requires either MAC or RRC signaling which is not as dynamic as physical layer signaling. In a further embodiment the priority order could be fixed in the standard. This approach would have the least impact to the signaling, however doesn't provide any flexibility, i.e. eNB cannot reconfigure the priority order.

A further embodiment of the invention relates again to the solution of informing the mobile terminal on the priority order of the uplink resource assignment by including thereto a priority field, which indicates the priority the mobile terminal should process the assignment with. Using HARQ on the uplink, it can be assumed that transport blocks are generated only for initial transmissions, so that the priority field on the PDCCH is dispensable for adaptive retransmission grants - i.e. in the uplink resource assignments for retransmissions of a transport block. One possibility is thus to use another PDCCH format for initial transmissions (including the priority field) and retransmissions (not including the priority field), which however again increases the complexity of the mobile terminal. Alternatively the PDCCH indicating uplink resources for an initial transmission and a PDCCH indicating resources for a retransmission could be addressed to a different identity, e.g. RNTI.

Another possibility to avoid waste the bits of the priority field on the PDCCH for adaptive retransmission grants, the bits of the priority field could be used for some other purposes. In one exemplary embodiment, the bits of the priority field could indicate in a PDCCH scheduling a retransmission uplink timing related information, i.e. Timing Advance command. Another option would be to use the bits for power control related information. Essentially there are several possibilities how to use the priority field for retransmission PDCCHs, i.e. a PDCCH assigning uplink resources for an adaptive retransmission.

Next, exemplary embodiments of the invention will be outlined where a more detailed transport block generation procedure are described. The invention is further proposing different optimized logical channel prioritization procedures that can handle multiple uplink resource assignments for uplink transmissions in a given TTI (or sub-frame). As will be outlined below in more detail, one proposed optimized logical channel prioritization procedure is accumulating the uplink resource assignments to a virtual transport block so that one (joint) logical channel prioritization procedure can be performed for all uplink resource assignments simultaneously. Another approach discussed in further detail below is the parallelization of multiple logical channel prioritization procedures. In this approach also the concept of virtual transport blocks is reused, but still multiple logical channel prioritization procedures for subsets of the uplink resource assignments are performed in parallel.

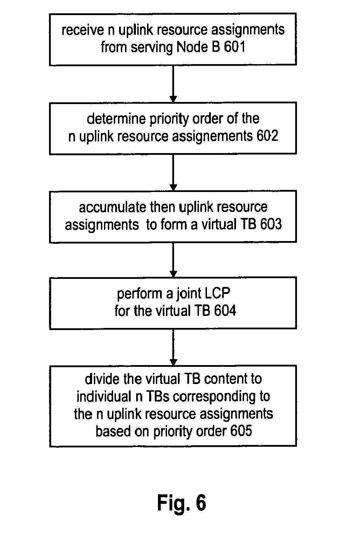

One exemplary implementation of a (joint) logical channel prioritization procedure according to an embodiment of the invention is shown in Fig. 6. Fig. 6 shows a flow chart of a transport block generation procedure according to an exemplary embodiment of the invention. The mobile terminal receives 601 multiple uplink resource assignments for one TTI, and determines 602 their priority order.

The mobile terminal accumulates 603 all received uplink resource assignments and forms a single "virtual" big transport block. For an advanced LTE system (LTE-A), it can be assumed that the transport block generation procedure respectively logical channel prioritization procedure is performed in MAC layer. When receiving an uplink resource assignment (PDCCH) at the physical layer, the MAC layer is informed on - amongst other parameters like HARQ protocol related parameters - the transport block size (TBS) of the uplink grant, i.e. number of bits/bytes which are contained in a transport block (TB) respectively MAC PDU. Therefore the accumulation of the uplink resource assignments means that the mobile terminal accumulates the transport block sizes of the corresponding received uplink resource assignments and forms one "big" virtual transport block with an accumulated virtual transport block size as shown in the equation below.

$$vTBS = \sum_{i=1}^{n} TBS_i$$

where $n$ denotes the number of uplink resource assignments in one TTI.

The mobile terminal will then perform 604 only one joint logical channel prioritization procedure for the virtual transport block.

For example, a mobile terminal may be assumed to receive two uplink resource assignments. In this example, the first uplink resource assignment allocates a $TBS_1$ of 500 bytes and a second uplink resource assignment allocates a $TBS_2$ of 700 bytes for a given TTI. The mobile terminal forms a "virtual" transport block with a virtual transport block size of 1200 bytes and runs the logical channel prioritization procedure as having a single uplink resource assignment with a TBS of 1200 bytes. In this example, the same algorithm as in the LTE Rel. 8 logical channel prioritization procedure might be reused. Due to the accumulation of the uplink resource assignments prior to performing the logical channel prioritization procedure, the mobile node needs to consider the boundaries given by the individual transport blocks as defined by their corresponding received uplink resource assignments and the priority order of the assignments when generating the individual assigned transport blocks by dividing the virtual transport block.

A procedure based on a token-bucket model could be used to fill the virtual transport block with data of the logical channels (LCHs) having data pending in the transmission buffer. In one exemplary embodiment of the invention, the mobile terminal maintains a variable Bj for each logical channel j. The variable Bj is initialized to zero when the related logical channel is established, and is incremented by the product PBR × TTI duration for each TTI, where PBR is Prioritized Bit Rate of logical channel j. The value of Bj never exceeds the bucket size and if the value of Bj is larger than the bucket size of logical channel j, it is set equal to the bucket size.

Using this token-bucket model in the logical channel prioritization procedure, the mobile terminal may allocate resources to the logical channels in the following steps:

- Step 1: All the logical channels with Bj > 0 are allocated resources in a decreasing priority order. If the PBR of a radio bearer is set to "infinity", the user equipment shall allocate resources for all the data that is available for transmission on the radio bearer before meeting the PBR of the lower priority radio bearer(s).

- Step 2: The user equipment shall decrement Bj by the total size of MAC SDUs served to logical channel j in Step 1.

- Step 3: If any resources remain, all the logical channels are served in a strict decreasing priority order (regardless of the value of Bj) until either the data for that logical channel or the uplink grant is exhausted, whichever comes first. Logical channels configured with equal priority should be served equally.

It should be noted that this procedure is essentially corresponding to the LCP procedure defined in 3GPP TS 36.321, except for the difference of the procedure being performed on the virtual transport block size ($vTBS$) obtained by accumulating the uplink resource assignments.

Upon having filled the virtual transport block with the logical channel data, the "content" of the virtual transport block is divided 605 into the individual transport blocks corresponding to the respective uplink resource assignments.

In one exemplary embodiment of the invention, the virtual transport block data is divided as follows. It can be assumed that there are $n$ uplink resource assignments $RA_i, i \in [1,...,n]$ yielding respective transport block sizes $TBS_i, i \in [1,...,n]$. The virtual transport block can be represented by a sequence of bits $[B_0,...,B_{vTBS-1}]$. Similarly, the $n$ transport blocks corresponding to the n uplink resource assignments can be represented by sequences of bits $\left[b_0^i,...,b_{TBS_i-1}^i\right], i \in [1,...,n]$. The virtual transport block is divided into the $n$ transport blocks, such that

$$\left[b_0^i,...,b_{TBS_i-1}^i\right]=\left[B_{\sum_{k=1}^{i}TBS_{k-1}},...,B_{\sum_{k=1}^{i}TBS_{k-1}+TBS_i-1}\right]$$

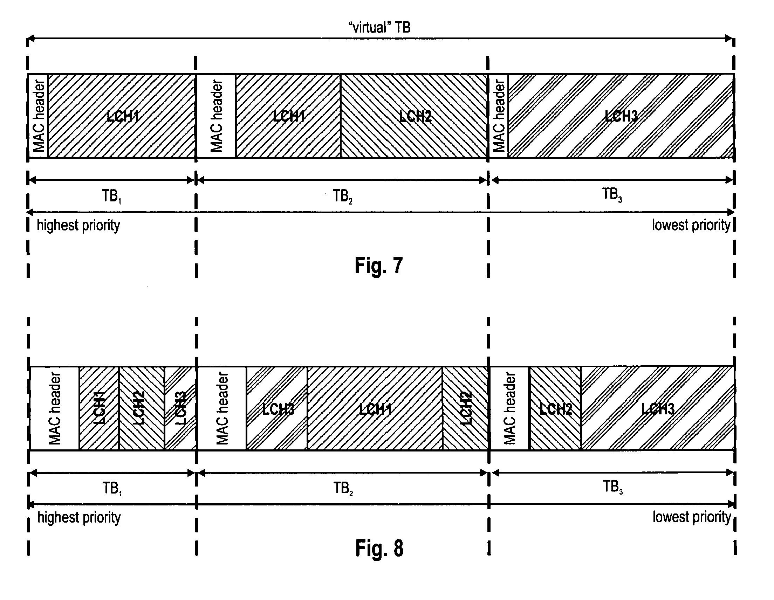

where $TBS_0 = 0$ and $i \in [1,...,n]$. Furthermore it can be assumed that the transport blocks are ordered in the given priority order such that the priority of the transport block is decreasing with increasing index i, i.e. the transport block with index $i = 1$ has the highest priority and the transport block with index $i = n$ has the lowest priority. Fig. 7 shows an example for the above outlined joint logical channel prioritization procedure according to an embodiment of the invention.

Generally, as can be perceived from Fig. 7, each transport block (respectively a MAC PDU as the transport block is referred to in the MAC layer) can be assumed for exemplary purposes to consist of a header (MAC header); zero or more MAC Service Data Units (MAC SDU) which contain the data of the logical channels multiplexed into the transport block; zero, or more MAC control elements, and optionally padding bits. The amount of header information within a MAC PDU respectively transport block is typically depending on the number of logical channels of which data is transported in a respective transport block. For each logical channel included in a transport block a so called MAC sub-header is required which indicates for example the identity of the respective logical channel and the length of the MAC SDU (data of o given logical channel). When now performing the joint logical channel prioritization procedure for the "virtual" TB size, the mobile terminal has to consider the MAC header for each of the transport block respectively uplink assignment which is accumulated. For example as can be seen in Fig. 7 each of the three transport blocks requires an individual MAC header. Therefore, the joint logical channel prioritization procedure needs to consider three MAC headers, whereas a logical channel prioritization procedure according to LTE Rel. 8 only needs to consider one MAC header since the logical channel prioritization procedure is only performed for one transport block, since there is no accumulation of uplink resource assignments.

As can be recognized in Fig. 7, by considering the priority order of the uplink resource assignments, it is ensured that the logical channel to transport block mapping is done in accordance to the signaled priority order, i.e. the highest priority logical channel (LCH1 in the example above) is mapped to the highest priority transport block, whereas the data of the lowest priority logical channel is mapped to the lowest priority transport block. Another advantage of this improved joint logical channel prioritization procedure is that the mobile terminal has only to perform one logical channel prioritization procedure instead of plural (here: three) logical channel prioritization procedures, which would need to be performed one after the other. This reduces the complexity of the mobile terminal. As previously noted, for example in LTE Rel. 8 and also in LTE-A there is (will be) a strict timing requirement for the generation of the transport blocks, since it may be expected for LTE-A that an uplink transmission takes place 4 ms after the corresponding uplink resource assignment (s) was/were received, similar to LTE Rel. 8. A LTE Rel. 8-compatible mobile terminal has to generate only one transport block per TTI, however for LTE-A, the mobile terminal may be required to generate multiple transport blocks within the same time period. Therefore it is important to reduce the UE complexity in order to fulfill the timing constraints.

Furthermore the content of the generated transport blocks would also look like different depending on whether UE performs multiple logical channel prioritization procedures sequentially or only one logical channel prioritization for a single "virtual" transport block as according to one embodiment of the present invention.

Fig. 8 shows exemplary generation of three transport blocks by sequentially performing the known LTE Rel. 8 logical channel prioritization procedures for each transport block. Comparing Fig. 7 and Fig. 8, it can be recognized that performing the three logical channel prioritization procedures sequentially results in a different content of the transport blocks than when performing a single joint logical channel prioritization procedure for a virtual transport block as shown in Fig. 7. This is due the consideration of the Prioritized Bit Rate (PBR) for each logical channel.

In the example Fig. 8, the first transport block (which is assumed the highest priority transport block according to the signaled priority) contains data of all three logical channels LCH1, LCH2 and LCH3, which is equivalent to the PBR value of the first two logical channels and the first part of the PBR value of the third logical channel. It should be noted that for examples shown in Fig. 7 and 8 logical channel LCH1 has the highest priority, logical channel LCH2 the second highest priority and logical channel LCH3 the lowest logical channel priority. The second transport block contains the remaining part of the PBR value of logical channel three and the remaining data of LCH1, which is the highest priority logical channel and part of the remaining data of the LCH2. The third transport block contains data of logical channels LCH2 and LCH3.

In this scenario where data belonging to three different logical channels is scheduled to be transmitted in one sub-frame the worst-case scenario from a MAC header overhead point of view would be to multiplex the data of each logical channel on every transport block. This would result in unnecessary MAC header overhead. As mentioned previously a MAC sub-header is required for each included logical channel in a transport block which indicates for example the logical channel ID and the length of the MAC SDU. Essentially the number of logical channels that a multiplexed in a transport block should be reduced in order to reduce the MAC header overhead.

From overhead point of view the transport block generation procedure using a virtual transport block as shown in Fig. 7 provides a reduced overhead compared to the approach where multiple logical channel prioritization procedures are performed sequentially as shown in Fig. 8. Furthermore when only a limited number of logical channels - in an ideal case only one - is multiplexed in a transport block, it is easier and more efficient to consider the QoS requirements of the logical channels when choosing the HARQ operation point which increases in turn the transmission efficiency.

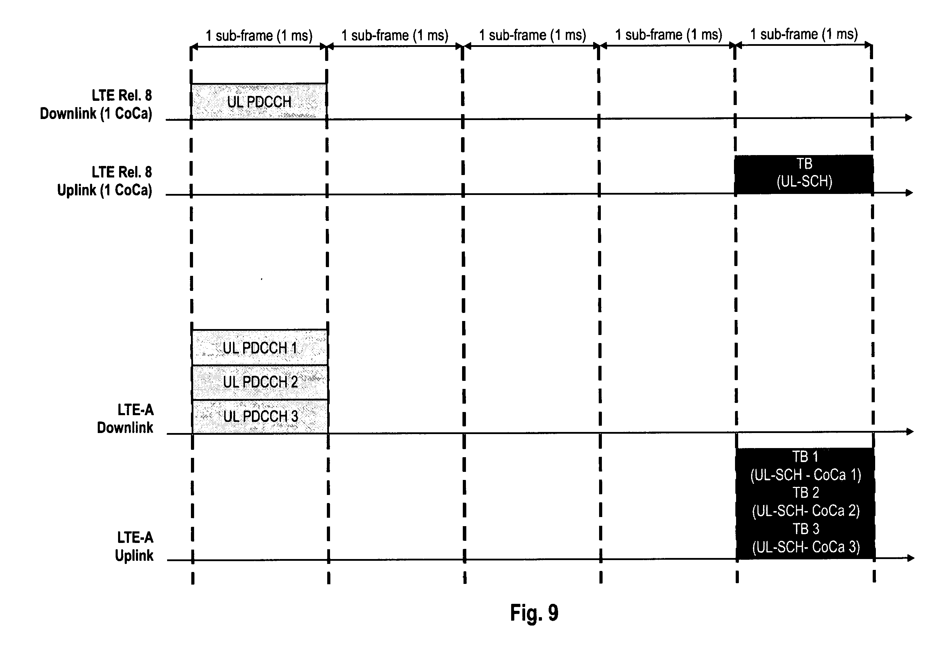

Another embodiment of the invention relates to the parallelization of (joint) logical channel prioritization procedures to reduce the complexity of the logical channel prioritization procedures for the case of bandwidth aggregation. Compared to LTE Rel. 8, where there is only one (uplink) transport block in one TTI, the complexity of the transport block generation procedure in LTE-A is increased. Assuming that the same timing requirements as in LTE Rel. 8 are kept in LTE-A, which appears a reasonable assumption due to the backward compatibility requirements, a mobile terminal may need to generate multiple transport blocks within the same time period, i.e. 4 ms, where the mobile terminal had only to generate one transport block for LTE Rel. 8. This is exemplarily highlighted in Fig. 9. The upper part of Fig. 9 relates to LTE Rel. 8, only one component carrier is configured in uplink and downlink direction. The UE receives a single uplink resource assignment (UL PDCCH) on a downlink control channel, and sends a single transport block (TB) on the uplink shared channel (UL-SCH). In LTE-A shown in the lower part of Fig. 9 multiple component carriers are configured in uplink and downlink direction. The UE receives multiple uplink resource assignments (UL PDCCH 1 to UL PDCCH 3) in one TTI (here: the TTI corresponds to one sub-frame) on a downlink control channel, and needs to generate and transmits multiple transport block (TB 1 to TB 3) on the uplink shared channel (UL-SCH).

As outline with respect to Fig. 6 and Fig. 7, the mobile terminal could perform only one logical channel prioritization procedure over for the "virtual" transport block rather than performing several logical channel prioritization procedures sequentially to reduce processing complexity. In another embodiment of the invention a complexity reduction is achieved by dividing one "big" joint logical channel prioritization procedure considering all logical channels (for "virtual" accumulated transport block) into smaller (joint) logical channel prioritization procedures considering only part of logical channels, which are performed in parallel.

The complexity of a logical channel prioritization procedure/transport block generation procedure depends on several parameters, like for example the number transport blocks within one TTI, number of logical channels with available data, the size of the Transport blocks which the mobile terminal needs to generate and also any combination thereof.

This alternative logical channel prioritization procedure for generating transport blocks could be for example implemented as follows. The logical channels having data in its corresponding buffer for uplink transmission are grouped for example according to their logical channel priorities to obtain a number of n logical channel groups. The number of n logical channel groups corresponds to a number of n logical channel prioritization procedures that can be performed by a mobile terminal in parallel. Similar to joint logical channel prioritization procedure considering all logical channels together using an accumulated virtual transport block, also in this embodiment the transport block sizes yielded by the uplink resource assignments are accumulated according to a priority order of their corresponding uplink resource assignments to obtain a number of n virtual transport block sizes of virtual transport blocks. Furthermore, each virtual transport block is associated to a logical channel group.

Next, n logical channel prioritization procedures are performed in parallel by the mobile terminal. A joint logical channel prioritization procedure (as described above) is performed for each virtual transport block to thereby fill the virtual transport block with data of logical channels of the associated logical channel group. The virtual transport blocks obtained by the n logical channel prioritization procedures are then divided into transport blocks, wherein the sizes of the transport blocks correspond to transport block sizes of their uplink resource assignments.

Please note that when accumulating the transport block sizes yielded by the uplink resource assignments to obtain the n virtual transport blocks, a virtual transport block may be formed by accumulating one or more uplink resource assignments. For example, if there are three uplink resource assignments, and there are two virtual transport blocks to be formed, the highest priority uplink resource assignment could define the transport block of the (highest priority/ranked) first virtual transport block, while the remaining two uplink resource assignments are accumulated to form a second (lower priority/ranked) virtual transport block. Similarly, the division of the virtual transport blocks into transport blocks corresponding in size to the respective uplink resource assignments may not be required for each virtual transport block. In the example above, the (highest priority/ranked) first virtual transport block is corresponding in its size to the transport block size yielded by the highest priority uplink resource assignment, so that the virtual transport block and the transport block for this highest priority uplink resource assignment is equivalent. For the (lower priority/ranked) virtual transport block, two uplink resource assignments have been accumulated, so that the virtual transport block is to be divided into two transport blocks with transport block sizes corresponding to the two uplink resource assignments respectively.

In a further embodiment of the invention the mobile terminal is assumed to have a given capability with respect to the transport block generation procedure. This capability (e.g. in form of capability information) is assumed to be known at the eNodeB. For example the mobile terminal signals the capability to network respectively eNode B. In an exemplary scenario, a mobile terminal can only perform a logical channel prioritization procedure for two transport blocks, if more than two logical channels are involved in order to still meet the processing time restrictions. In case there are more than two transport blocks assigned in one TTI and more than two logical channels are active and have data in their buffer, the mobile terminal performs one logical channel prioritization considering the two highest priority logical channels and maps the data onto the first two transport blocks according to the signaled priority order signaled. The second logical channel prioritization procedure which is performed in parallel to the first logical channel prioritization procedure, considers the remaining logical channels with data in their buffer. The data of those logical channels is mapped onto the other Transport blocks according to priority order.

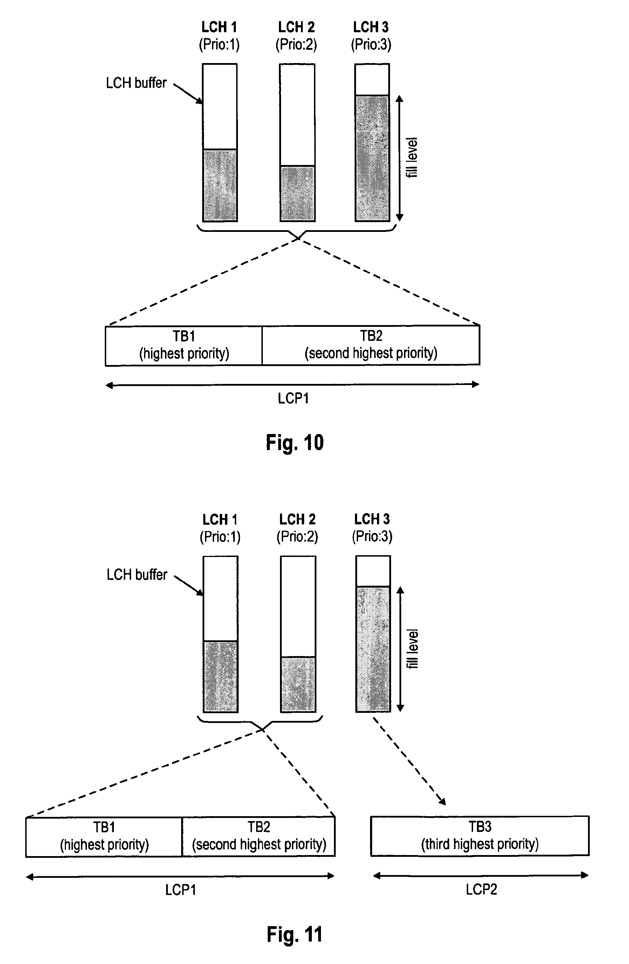

As shown in Fig. 10, in one example, the mobile terminal capability allows the mobile terminal to perform one (joint) logical channel prioritization procedure for two transport blocks when there are multiple logical channels with available data in the corresponding buffer. Hence, in this example, where there are two transport block (respectively two uplink resource assignments for the TTI) and three logical channels (LCH1, LCH2 and LCH3) having data for transmission in their buffer, only one logical channel prioritization procedure considering all (three) logical channels needs to be performed by the mobile terminal,. Essentially mobile terminal would accumulate the two received uplink resource assignments to form one accumulated virtual transport block size and performs the logical channel prioritization procedure with this accumulated virtual transport block size as a parameter as described above with respect to Fig. 6 and Fig. 7.

In the scenario shown in Fig. 11, the mobile terminal is assumed to be able to process only a maximum of two logical channels per virtual transport block and can accumulate up to two (i.e. 1 or 2) uplink resource assignment(s) to a virtual transport block. Hence, given that three logical channels (LCH1, LCH2 and LCH3) have data for transmission in their buffer and there are three uplink resource assignments, the mobile terminal needs to perform two logical channel prioritization procedures in parallel in order to generate the three transport blocks, since the mobile terminal capability doesn't allow to perform only one logical channel prioritization procedure over the accumulation of three uplink resource assignment when more than two logical channels are involved.

According to the example shown in Fig. 11, the mobile terminal would accumulate the two highest priority assignments to form a first virtual transport block size and run the joint logical channel prioritization procedure with this accumulated first virtual transport block size considering only the two highest priority logical channels (LCH1 and LCH2) as described above with respect to Fig. 6 and Fig. 7 to obtain two transport blocks (TB1 and TB2). In parallel the mobile terminal would generate the third transport block TB3 by considering only the data of the remaining logical channel LCH3. For generating the third transport block TB3, the transport block size yielded by the uplink resource assignment for transport block TB3 is equal to the "accumulated" virtual transport block size and the "joint" logical channel prioritization is performed for logical channel LCH3 only.

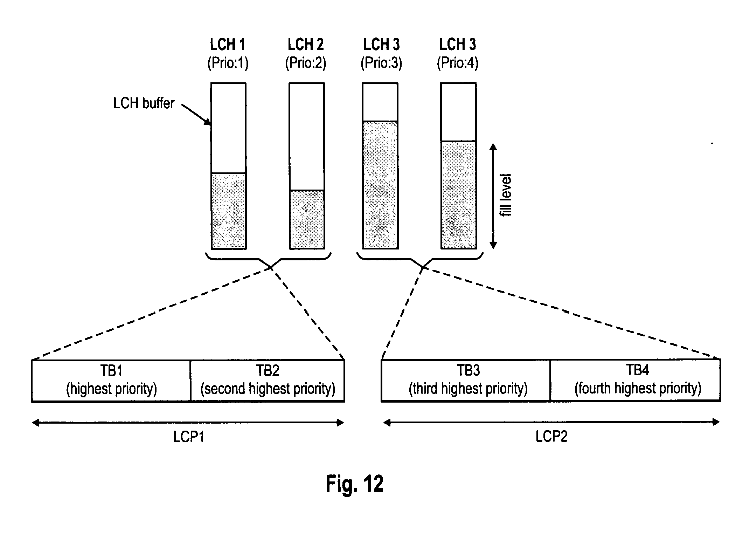

In the scenario shown in Fig. 12, the mobile terminal is again assumed to be able to process only a maximum of two logical channels per virtual transport block and can accumulate up to two (i.e. 1 or 2) uplink resource assignment (s) to a virtual transport block. However, in the scenario shown in Fig. 12, the mobile terminal has four logical channels (LCH1, LCH2, LCH3 and LCH4) of which data is pending for transmission and there are four uplink resource assignments, respectively transport blocks allocated. In this exemplary scenario, the mobile terminal will accumulate the two highest priority uplink resource assignments/transport blocks (TB1 and TB2) and the two lowest priority uplink resource assignments/transport blocks (TB3 and TB4) to a first and second virtual transport block, respectively. Further, the mobile terminal performs a first joint logical channel prioritization procedure on the two highest priority logical channels (LCH1 and LCH2) to fill the first virtual transport block accumulated from transport blocks (TB1 and TB2, and - in parallel - a second joint logical channel prioritization procedure on the two lowest priority logical channels (LCH3 and LCH4) to fill the first virtual transport block accumulated from transport blocks TB3 and TB4.

As already mentioned before the complexity depends on several parameters, therefore also the mobile terminal capability could be defined in a different way. The main point of this parallelization of logical channel prioritization procedures is to reduce the complexity of the transport block generation procedure by performing several lower complex logical channel prioritization procedures in parallel. It should be noted that the UE behavior with respect to logical channel prioritization procedure, e.g. how the logical channels are mapped to the transport blocks, should be known by the eNodeB in order to allow for an efficient QoS control for uplink transmissions. Hence the mapping rules, e.g. how the mobile terminal (UE) groups the logical channels and maps them to the virtual transport blocks, should be exchanged between mobile terminal (UE) and eNodeB.

Another aspect of the invention is the handling of semi-persistent scheduled transmissions in a bandwidth aggregation scenario. As indicated in the Technical Background section above, the eNodeB may decide to schedule individual radio bearers (logical channels) on a semi-persistent basis. Due to the fact that there can be only one transport block per TTI in the uplink in LTE Rel. 8, there can be only either a semi-persistently scheduled transmission or a dynamically scheduled transmission.

However for LTE-A due to the support of bandwidth aggregation, there could be in one TTI semi-persistent scheduled transmission(s) simultaneously to dynamic transmissions. In case the priority order in which the mobile terminal should treat received uplink resource assignments is signaled by higher layer signaling, e.g. MAC control signaling, it basically means, that a SPS uplink resource assignment is processed by the mobile terminal according to the priority of the corresponding component carrier as indicated by the priority order. As an SPS resource allocation on uplink may be assumed to be active for a long time duration, there is a risk that SPS allocations are treated with a low priority, for example if the priority of the component carrier was set to low priority value since uplink interference situation changed. On the other hand data which is transmitted on the semi-persistently allocated resources is usually delay-critical hence high priority data like VoIP or gaming. Therefore in a further embodiment of the invention, SPS resource assignments are always treated as highest priority regardless of the priority of the corresponding component carrier according to the priority order. The same rule may also be used for a dynamic uplink resource allocation which overrides a SPS resource allocation.

In the examples above, a bandwidth aggregation scenario has been assumed, where the mobile terminal receives multiple uplink resource assignments for different component carriers within the same TTI. The concept of introducing a priority respectively priority order for uplink assignments can be equally applied for the case of spatial multiplexing. Spatial multiplexing denotes a MIMO technique or MIMO transmission mode, where more than one transport block can be transmitted at the same time and on the same frequency using multiple reception and transmission antennas. Separation of the different transport blocks is done by means of signal processing at the receiver and/or transmitter side. Essentially the transport blocks are transmitted on different MIMO channels respectively MIMO layers but on the same component carrier.

Using spatial multiplexing - which is considered for LTE-A uplink - the uplink resource assignments allocate an uplink resource for MIMO layers on a component carriers. Hence, there may be multiple uplink resource assignments for individual MIMO layers on one component carrier. Similar to the introduction of a priority order for component carriers, also for MIMO scenarios a priority or priority order of the upl ink resource assignments for the MIMO layers is used in the generation of the transport blocks. The priority order of the MIMO layers could be pre-configured (e.g. during radio bearer establishment) or could be signaled by physical layer, MAC or RRC signaling as mentioned previously.

Hence, assuming a single component carrier system - such as LTE Rel. 8 - the uplink resource assignments for the individual MIMO layers of the component carrier could be accumulated to a virtual transport block and a joint logical channel procedure could be performed on the virtual transport block as described before. The content of the virtual transport block needs to be then divided to the individual transport blocks according to the priority order of their assignments and the transport blocks are transmitted via the respective antennas of the mobile terminal.

Similarly also a parallelization of joint logical channel procedures is possible, by operating on transport blocks, respectively uplink resource assignments for MIMO layers instead of transport blocks, respectively uplink resource assignments for component carriers.

Furthermore, the concepts of the invention outlined herein may also be used in systems that provide bandwidth aggregation (i.e. multiple component carriers are configured) and spatial multiplexing. In this case the uplink resource assignment grants a resource on the uplink for transmitting a transport block on a given MIMO layer and component carrier. Also for this system design the joint logical channel procedures can be used in a similar fashion as discussed above.

In this context, please note that there may be a "joint" priority order for uplink resource assignments on a per MIMO layer and per component carrier basis, or alternatively, there may be separate priority orders, i.e. a priority order for MIMO layers (independent from the component carriers) and a priority order for the component carriers (independent from the component carriers). Third, there is also the possibility that spatial multiplexing is used but MIMO layers are assumed to be equal priority (so that there is no priority order for MIMO layers), however there is a priority order for the component carriers.

In the first case, where there is a "joint" prioritization based on MIMO layer and component carrier, the (joint) logical channel prioritization procedures can be reused to generate the transport blocks for the individual component carriers and MIMO layers.

In the second and third case, according to an embodiment of the invention, the uplink resource assignments of the MIMO layers are first accumulated (e.g. according to the MIMO layer priorities, if available) per component carrier, and subsequently the obtained virtual transports blocks of the component carriers are accumulated according to their priority order to perform a (joint) logical channel prioritization on the virtual transport block obtained from the component carrier-wise accumulation.

When having filled the virtual transport block obtained from the component carrier-wise accumulation with data of the logical channels, same is again divided in virtual transport blocks per component carrier, and subsequently the virtual transport blocks per component carrier are further divided into individual transport blocks for the respective MIMO layers in each component carrier.

In a further embodiment of the invention, in the third case where there is no priority order of the MIMO layers, there may be one uplink resource assignment sent per component carrier that covers all MIMO layers. Accordingly, in this case the accumulation of uplink grants for the MIMO layers in the procedure above can be omitted. Nevertheless, the virtual transport blocks per component carrier obtained by division needs to be further divided to transport blocks for the MIMO layers in each component carrier - e.g. assigning equal shares of the virtual transport blocks per component carrier to each MIMO layer for transmission.

In some embodiment of the invention, the concepts of the invention have been described with respect to an improved 3GPP LTE system, where there is one component carrier configured on the air interface. The concepts of the invention may also be equally applied to a 3GPP LTE-Advanced (LTE-A) system presently discussed in the 3GPP.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

**Claims**

1.  A method for generating transport blocks for uplink transmission via an air interface in a mobile communication system, the method comprising the steps of:

    receiving at a mobile terminal plural uplink resource assignments on a control channel for allocating respective radio resources for uplink transmission to the mobile terminal, wherein the uplink resource assignments are ranked according to a priority order, and
    generating respective transport blocks for transmission on the allocated respective radio resources, wherein the data of different logical channels is multiplexed to the transport blocks according to the priority order of their corresponding uplink resource assignment.

2.  The method according to claim 1, wherein the priority order of the uplink resource assignments is determined based on the priority indicated for each uplink resource assignment.

3.  The method according to claim 2, wherein the uplink resource assignments comprise a field for indicate their respective priority, wherein the field is used to indicate the priority only for allocations of initial transmission of a transport block.

4.  The method according to claim 1, wherein each uplink resource assignment is allocating radio resources on one of plural component carriers and the component carriers are assigned respective priorities, wherein the priority order of the uplink resource assignments is determined according to the priorities of the component carriers on which resources are allocated by the uplink resource assignments.

5.  The method according to claim 4, wherein the priority order of the component carriers is signaled by means of higher layer signaling, such as MAC control signaling or radio resource signaling, to the mobile terminal.

6.  The method according to one of claims 1 to 5, wherein transport blocks are sequentially filled with data of the logical channels in the priority order of their corresponding uplink resource assignments and logical channel priorities.

7.  A method for generating transport blocks based on the priority order of their corresponding uplink resource assignments, each uplink resource assignments yielding a transport block size, the method comprising the steps of:

    accumulating the transport block sizes yielded by the uplink resource assignments to obtain a virtual transport block size of a virtual transport block,

performing a joint logical channel prioritization procedure over all uplink resource assignments to thereby fill the virtual transport block with data of logical channels according to their logical channel priority, and

dividing the virtual transport block into transport blocks, wherein the sizes of the transport blocks correspond to transport block sizes of their uplink resource assignments and the virtual transport block is divided into the transport blocks according to the priority order of the uplink resource assignments.

8. The method according to claims 7, wherein the transport blocks are sequentially filled with data of the virtual transport block in the priority order of their corresponding uplink resource assignments.

9. The method according to claim 7 or 8, wherein there are $n$ uplink resource assignments $RA_i, i \in [1,...,n]$ yielding respective transport block sizes $TBS_i, i \in [1,...,n]$, and wherein the virtual transport size is $vTBS = \sum_{i=1}^{n} TBS_i$ , wherein the virtual transport block can be represented by a sequence of bits $[B_0,...,B_{vTBS-1}]$ and the n transport blocks corresponding to the n uplink resource assignments can be represented by sequences of bits

$$\left[ b_0^i,...,b_{TBS_i-1}^i \right], i \in \left[ 1,...,n \right],$$

wherein the virtual transport block is divided into the n transport blocks, such that

$$\left[ b_0^i,...,b_{TBS_i-1}^i \right] = \left[ B_{\sum_{k=1}^{i} TBS_{k-1}} ,..., B_{\sum_{k=1}^{i} TBS_{k-1}+TBS_i-1} \right],$$

where $TBS_0 = 0$ and $i \in [1,...,n]$.

10. A method for generating transport blocks based on the priority order of their corresponding uplink resource assignments, each uplink resource assignment yielding a transport block size, the method comprising the steps of:

grouping logical channels having data pending for uplink transmission according to their logical channel priorities to obtain a number of n logical channel groups, wherein the number of n logical channel groups corresponds to a number of n logical channel prioritization procedures that can be performed in parallel by mobile terminal, accumulating the transport block sizes yielded by the uplink resource assignments according to a priority order of their corresponding uplink resource assignments to obtain a number of n virtual transport block sizes of virtual transport blocks,

associating each virtual transport block to a logical channel group,

performing n logical channel prioritization procedures in parallel, wherein a joint logical channel prioritization procedure is performed for each virtual transport block to thereby fill the virtual transport block with data of logical channels of the associated logical channel group, and

dividing the virtual transport blocks into transport blocks, wherein the sizes of the transport blocks correspond to transport block sizes of their uplink resource assignments.

11. The method according to claim 10, wherein the mobile terminal can process up to an integer number of *l* logical channels per logical channel prioritization procedure while meeting a time contain for the generation of the transport blocks, and the mobile terminal can perform j logical channel prioritization procedures in parallel while meeting said time constraint, and

wherein a maximum of *l* logical channels is grouped into a respective one of the first *n*-1 logical channel groups in ascending order of their logical channel priorities, and

wherein the association of logical channel groups and virtual transport blocks is such that the logical channel groups carrying the highest logical channel priority data is associated to the virtual transport block accumulating the transport block sizes yielded by the highest priority uplink resource assignments, and such that the logical channel groups carrying the lowest logical channel priority data is associated to the virtual transport block accumulating the transport block sizes yielded by the lowest priority uplink resource assignments.

12. The method according to one of claims 7 to 11, further comprising the steps of one of claims 1 to 6.

**13.** A mobile terminal for generating transport blocks for uplink transmission via an air interface in a mobile communication system, the mobile terminal comprising:

a receiver for receiving at a mobile terminal plural uplink resource assignments on a control channel for allocating respective radio resources for uplink transmission to the mobile terminal, wherein the uplink resource assignments are ranked according to a priority order, and
a transport block generation unit for generating respective transport blocks for transmission on the allocated respective radio resources, wherein the data of different logical channels is multiplexed to the transport blocks according to the priority order of their corresponding uplink resource assignment.

**14.** A transport block generation unit for generating transport blocks based on the priority order of their corresponding uplink resource assignments, each uplink resource assignments yielding a transport block size, transport block generation unit comprising:

an accumulation unit for accumulating the transport block sizes yielded by the uplink resource assignments to obtain a virtual transport block size of a virtual transport block,
a logical channel prioritization unit for performing a joint logical channel prioritization procedure over all uplink resource assignments to thereby fill the virtual transport block with data of logical channels according to their logical channel priority, and
a division unit for dividing the virtual transport block into transport blocks,
wherein the sizes of the transport blocks correspond to transport block sizes of their uplink resource assignments and the virtual transport block is divided into the transport blocks according to the priority order of the uplink resource assignments.

**15.** A transport block generation unit for generating transport blocks based on the priority order of their corresponding uplink resource assignments, each uplink resource assignment yielding a transport block size, the transport block generation unit comprising:

a grouping unit for grouping logical channels having data pending for uplink transmission according to their logical channel priorities to obtain a number of n logical channel groups, wherein the number of n logical channel groups corresponds to a number of n logical channel prioritization procedures that can be performed in parallel by the transport block generation unit,
an accumulation unit for accumulating the transport block sizes yielded by the uplink resource assignments according to a priority order of their corresponding uplink resource assignments to obtain a number of n virtual transport block sizes of virtual transport blocks,
an processing unit for associating each virtual transport block to a logical channel group,
a logical channel prioritization unit for performing n logical channel prioritization procedures in parallel, wherein the logical channel prioritization unit is adapted to perform a joint logical channel prioritization procedure for each virtual transport block and to thereby fill the virtual transport block with data of logical channels of the associated logical channel group, and
a dividing unit for dividing the virtual transport blocks into transport blocks,
wherein the sizes of the transport blocks correspond to transport block sizes of their uplink resource assignments.

Fig. 1

MME / Serving GW    MME / Serving GW

······· S1 interface

— — X2 interface

eNB

eNB

eNB

E-UTRAN

**Fig. 2**

EP 2 244 514 A1

Physical
Channel
Mapping

$T_{subframe}=0.5$ ms

$BW_{grant}$

system bandwidth

**Fig. 3**

Physical
Channel
Mapping

$BW_{grant}=M \cdot BW_{subcarrier}$

$T_{subframe}=0.5$ ms

$BW_{subcarrier}$

system bandwidth

**Fig. 4**

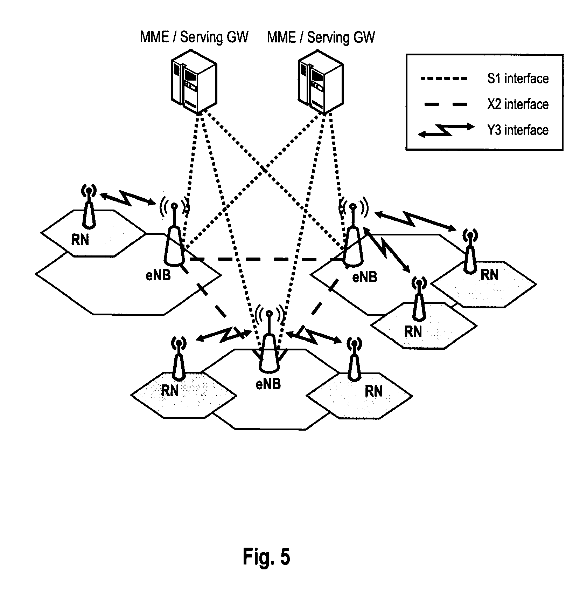

Fig. 5

```
┌─────────────────────────────────┐
│  receive n uplink resource assignments │
│     from serving Node B 601      │
└─────────────────────────────────┘
                 │
                 ▼
┌─────────────────────────────────┐
│    determine priority order of the   │
│   n uplink resource assignements 602  │
└─────────────────────────────────┘
                 │
                 ▼
┌─────────────────────────────────┐
│    accumulate then uplink resource   │
│   assignments  to form a virtual TB 603 │
└─────────────────────────────────┘
                 │
                 ▼
┌─────────────────────────────────┐
│       perform a joint LCP        │
│      for the virtual TB 604      │
└─────────────────────────────────┘
                 │
                 ▼
┌─────────────────────────────────┐
│    divide the virtual TB content to  │
│  individual n TBs corresponding to   │
│   the n uplink resource assignments  │
│     based on priority order 605      │
└─────────────────────────────────┘
```

# Fig. 6

"virtual" TB

| MAC header | LCH1 | MAC header | LCH1 | LCH2 | MAC header | LCH3 |

| TB₁ | TB₂ | TB₃ |

highest priority                                                  lowest priority

**Fig. 7**

| MAC header | LCH1 | LCH2 | LCH3 | MAC header | LCH3 | LCH1 | LCH2 | MAC header | LCH2 | LCH3 |

| TB₁ | TB₂ | TB₃ |

highest priority                                                  lowest priority

**Fig. 8**

1 sub-frame (1 ms)   1 sub-frame (1 ms)   1 sub-frame (1 ms)   1 sub-frame (1 ms)   1 sub-frame (1 ms)

LTE Rel. 8
Downlink (1 CoCa)

UL PDCCH

LTE Rel. 8
Uplink (1 CoCa)

TB
(UL-SCH)

LTE-A
Downlink

UL PDCCH 1

UL PDCCH 2

UL PDCCH 3

LTE-A
Uplink

TB 1
(UL-SCH - CoCa 1)
TB 2
(UL-SCH- CoCa 2)
TB 3
(UL-SCH- CoCa 3)

**Fig. 9**

EP 2 244 514 A1

LCH 1
(Prio:1)

LCH 2
(Prio:2)

LCH 3
(Prio:3)

LCH buffer

fill level

| TB1<br>(highest priority) | TB2<br>(second highest priority) |
|---|---|

LCP1

**Fig. 10**

LCH 1
(Prio:1)

LCH 2
(Prio:2)

LCH 3
(Prio:3)

LCH buffer

fill level

| TB1<br>(highest priority) | TB2<br>(second highest priority) |
|---|---|

LCP1

| TB3<br>(third highest priority) |
|---|

LCP2

**Fig. 11**

**Fig. 12**

Europäisches
Patentamt

European
Patent Office

Office européen
des brevets

# EUROPEAN SEARCH REPORT

Application Number

EP 09 00 5727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZTE: "Downlink data and control structure for LTE-A" 3GPP DRAFT; R1-084113, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), pages 1-5, XP050317413 [retrieved on 2008-11-04] * section 2 * | 1-15 | INV. H04W72/12 |
| A | ERICSSON: "Carrier aggregation in LTE-Advanced" 3GPP DRAFT; R1-082468, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), pages 1-6, XP050110739 [retrieved on 2008-06-24] * section 3 * | 1-15 | |
| A,D | 3RD GENERATION PARTNERSHIP PROJECT: "3rd Generation Partnership Project; Technical Specification Group Radio Access Network; Evolved Universal Terrestrial Radio Access (E-UTRA) Medium Access Control (MAC) protocol specification (Release 8); 3GPP TS 36.321 V8.5.0" [Online] March 2009 (2009-03), pages 1-46, XP002555765 Retrieved from the Internet: URL:http://www.3gpp.org/ftp/Specs/html-inf o/36321.htm> [retrieved on 2009-10-21] * section 5.10 * | 1-15 | |

TECHNICAL FIELDS
SEARCHED (IPC)

H04W

-/--

The present search report has been drawn up for all claims

| Place of search | Date of completion of the search | Examiner |
|---|---|---|
| Munich | 17 November 2009 | Goedhart, André |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

**Application Number**

EP 09 00 5727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 986 455 A (MATSUSHITA ELECTRIC IND CO LTD [JP]) 29 October 2008 (2008-10-29) * paragraphs [0002] - [0048], [0090] - [0095] * * figures 1-4,6 * | 1-15 | |
| A,D | T-MOBILE ET AL.: "Operator requirements and scenarios for UL buffer reporting /scheduling and grant assignment in E-UTRAN; R2-062606" 3GPP TSG-RAN WG#24, [Online] 28 August 2006 (2006-08-28), pages 1-2, XP002555766 Retrieved from the Internet: URL:http://www.3gpp.org/ftp/tsg_ran/WG2_RL 2/TSGR2_54/Documents/> [retrieved on 2009-10-20] * the whole document * | 1-15 | |
| T | LG ELECTRONICS INC: "Logical Channel Prioritization for Aggregated Carriers" 3GPP DRAFT; R2-094630 LOGICAL CHANNEL PRIORITIZATION FOR AGGREGATED CARRIERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), pages 1-3, XP050352723 [retrieved on 2009-08-18] * sections 1, 2 and 2.3 * | 1-15 | **TECHNICAL FIELDS SEARCHED (IPC)** |

The present search report has been drawn up for all claims

| Place of search | Date of completion of the search | Examiner |
|---|---|---|
| Munich | 17 November 2009 | Goedhart, André |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 09 00 5727

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2009

| Patent document cited in search report | | Publication date | Patent family member(s) | | Publication date |
|---|---|---|---|---|---|
| EP 1986455 | A | 29-10-2008 | WO | 2008131902 A1 | 06-11-2008 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300,* January 2009